# EUROPEAN PATENT APPLICATION

(11) **EP 4 618 371 A1**
(43) Date of publication of application: **17.09.2025**
(21) Application number: 23913962.9
(22) Date of filing: 04.01.2023
(51) Int. Cl.: H02J 15/00

(54) **ENERGY STORAGE SYSTEM, BATTERY SELF-HEATING CONTROL METHOD AND APPARATUS, DEVICE, AND STORAGE MEDIUM**

(71) Applicant: Contemporary Amperex Technology Co., Limited, Ningde, Fujian 352100 (CN)
(72) Inventor: CAI, Feilong, Ningde, Fujian 352100 (CN); CHEN, Wei, Ningde, Fujian 352100 (CN); PAN, Xianxi, Ningde, Fujian 352100 (CN); HUANG, Xiaojian, Ningde, Fujian 352100 (CN)
(74) Representative: Gong, Jinping
(86) International application number: PCT/CN2023/070290
(87) International publication number: WO 2024/145803

(57) **Abstract**

Embodiments of this application provide an energy storage system, a battery self-heating control method, a battery self-heating control apparatus, a device, and a storage medium. The energy storage system includes a system controller, a switch module, and a plurality of electrical cabinets, where the plurality of electrical cabinets are connected in parallel, one end of the switch module is connected to a high-voltage bus, and another end is connected to a connection point of the plurality of parallel electrical cabinets; the system controller is communicatively connected to the switch module and each electrical cabinet, respectively; and the system controller is configured to control the formation of a charge-discharge loop among the plurality of electrical cabinets when there exists an electrical cabinet among the plurality of electrical cabinets that meets a preset heating condition. In this application, when it is determined that there is an electrical cabinet that meets the preset heating condition, the switch module is disconnected to enable charging and discharging between electrical cabinets, forming an alternating current flowing through batteries in a plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

## Description

### TECHNICAL FIELD

This application relates to the field of battery technologies, and in particular, to an energy storage system, a battery self-heating control method, a battery self-heating control apparatus, a device, and a storage medium.

### BACKGROUND

Some energy storage systems convert energy such as solar energy, wind energy, or nuclear energy into electric energy and stored the electric energy in batteries of a plurality of electrical cabinets. For example, a photovoltaic source in a photovoltaic energy storage system converts solar energy into electric energy and stores the electric energy in batteries of a plurality of electrical cabinets. At low temperatures, the charging and discharging performance of batteries is significantly degraded, and this has a significant impact on the energy conversion of these energy storage systems. Therefore, it is necessary to heat the batteries in low-temperature environments.

In related art, a charge-discharge loop is formed by a voltage converter in an electrical cabinet, a capacitor on a high-voltage bus, and a power inverter connected to a load or power grid. The battery and the capacitor on the high-voltage bus are alternately charged and discharged through this loop, causing the internal resistance of the battery to generate heat and achieving the effect of heating the battery.

However, when an energy storage system has a plurality of electrical cabinets, the bus capacitor can only heat the batteries in the electrical cabinets sequentially, with a slow heating speed and low efficiency.

### SUMMARY

Embodiments of this application provide an energy storage system, a battery self-heating control method, a battery self-heating control apparatus, a device, and a storage medium, to allow for charging and discharging between electrical cabinets and implement simultaneous heating of batteries in a plurality of electrical cabinets, improving the heating efficiency.

According to a first aspect, an embodiment of this application provides an energy storage system including a system controller, a switch module, and a plurality of electrical cabinets; where
the plurality of electrical cabinets are connected in parallel, one end of the switch module is connected to a high-voltage bus, and another end is connected to a connection point of the plurality of parallel electrical cabinets;
the system controller is communicatively connected to the switch module and each electrical cabinet, respectively; and
the system controller is configured to control the formation of a charge-discharge loop among the plurality of electrical cabinets when there exists an electrical cabinet among the plurality of electrical cabinets that meets a preset heating condition.

In this embodiment, a switch module is provided between the electrical cabinets and the high-voltage bus in the energy storage system. When it is determined that there is an electrical cabinet that meets the preset heating condition, a charge-discharge loop is formed among a plurality of electrical cabinets to allow for charging and discharging between the electrical cabinets, thereby forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

In some embodiments, the electrical cabinet includes a battery, a battery management system, and a voltage converter.

The battery management system, the system controller, and the voltage converter are all communicatively connected.

In the embodiments, the voltage converter of each electrical cabinet is electrically connected to the switch module and is communicatively connected to the system controller. When there is an electrical cabinet that meets the preset heating condition, the switch module can be used to disconnect all electrical cabinets from the high-voltage bus, thereby enabling the formation of a charge-discharge loop among a plurality of electrical cabinets to implement charging and discharging between the electrical cabinets.

In some embodiments, the battery management system is configured to detect electrical parameters of the battery and transmit the electrical parameters to the system controller; and the system controller is configured to control the switch module to disconnect when it is determined based on the electrical parameters that the electrical cabinet meets the preset heating condition.

In the embodiments, in determining whether a battery temperature and the battery power meet the preset heating condition based on the electrical parameters of the battery, the battery that needs to be heated can be accurately determined, and the problem of overdischarging caused by charging and discharging when the power of the battery is insufficient can be avoided. When it is determined that there exists a battery that meets the preset heating condition, the switch module is controlled to disconnect, creating a condition for the subsequent formation of a charge-discharge loop among a plurality of electrical cabinets to enable charging and discharging between the electrical cabinets.

In some embodiments, the system controller is configured to send a heating instruction to at least one of the electrical cabinets when there exists an electrical cabinet among the plurality of electrical cabinets that meets the preset heating condition, the at least one electrical cabinet including the electrical cabinet that meets the preset heating condition; and the at least one electrical cabinet is configured to construct a charge-discharge loop among the electrical cabinets based on the heating instruction and control batteries in the charge-discharge loop to alternately charge and discharge.

In the embodiments, when it is determined that there exists a battery that meets the preset heating condition, the heating instruction is sent to the corresponding electrical cabinets, so that the electrical cabinets then construct a charge-discharge loop including a plurality of electrical cabinets based on the heating instruction, and alternately carry out charging and di scharging in the constructed charge-discharge loop based on the heating instruction to implement charging and discharging between the electrical cabinets. This enables simultaneous heating of the plurality of electrical cabinets, improving the heating efficiency.

In some embodiments, the voltage converter includes at least one bridge arm with flying capacitors and at least one energy storage element, the bridge arms corresponding one-to-one with the energy storage elements; and one end of the energy storage element is connected to the positive electrode of a battery in an electrical cabinet to which the voltage converter belongs, and the other end of the energy storage element is connected to a connection point between an upper bridge arm and a lower bridge arm of a bridge arm corresponding to the energy storage element.

In the embodiment, the voltage converter may have a flying capacitor and may include one or more bridge arms, so that the formed charge-discharge loop between the electrical cabinets can have a variety of possible circuit structures.

In some embodiments, the voltage converter includes at least one bridge arm without flying capacitors and at least two energy storage elements, each bridge arm being connected to two energy storage elements, respectively.

The bridge arm includes at least four sequentially connected switching transistors; and the positive and negative electrodes of a battery in an electrical cabinet to which the voltage converter belongs are respectively connected to two energy storage elements connected to the bridge arm.

In the embodiment, the voltage converter may not have a flying capacitor and may include one or more bridge arms, so that the formed charge-discharge loop between the electrical cabinets can have a variety of possible circuit structures.

According to a second aspect, an embodiment of this application provides a battery self-heating control method, applied to the energy storage system according to the first aspect. The method includes:
determining that there exists at least one target electrical cabinet that meets a preset heating condition; and
controlling a plurality of electrical cabinets including the target electrical cabinet to form a charge-discharge loop, and charging and discharging a battery in the target electrical cabinet based on the charge-discharge loop.

In this embodiment, when it is determined that there is an electrical cabinet that meets the preset heating condition, a charge-discharge loop is formed among a plurality of electrical cabinets to enable charging and discharging between the electrical cabinets, thereby forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

In some embodiments, the controlling a plurality of electrical cabinets including the target electrical cabinet to form a charge-discharge loop includes:
controlling the switch module to disconnect;
determining a plurality of candidate electrical cabinets for forming a charge-discharge loop, the plurality of candidate electrical cabinets including the target electrical cabinet; and
controlling on/off of power devices in voltage converters of the plurality of candidate electrical cabinets to form a charge loop and a discharge loop that are alternately switched.

In the embodiments, when it is determined that there is an electrical cabinet that meets the preset heating condition, the switch module is disconnected to suspend the transmission of electric energy from each electrical cabinet to the power grid, and the energy storage source also suspends the storage of electric energy in the electrical cabinets, creating a condition for the subsequent construction of a charge-discharge loop among the electrical cabinets. The system controller determines the electrical cabinets that form the charge-discharge loop, and controls on/off of power devices in voltage converters of these electrical cabinets, forming a charge-discharge loop among these electrical cabinets to implement charging and discharging between these electrical cabinets. This can cause the internal resistance of the batteries in the plurality of electrical cabinets to generate heat simultaneously, improving the efficiency of heating batteries of the plurality of electrical cabinets in the energy storage system.

In some embodiments, the determining a plurality of candidate electrical cabinets for forming a charge-discharge loop includes:
determining, based on electrical parameters of batteries in remaining electrical cabinets except the target electrical cabinet, electrical cabinets that meet a preset charge-discharge condition from the remaining electrical cabinets;
selecting at least one electrical cabinet from the electrical cabinets that meet the preset charge-discharge condition; and
determining the target electrical cabinet and the selected at least one electrical cabinet as the plurality of candidate electrical cabinets for forming a charge-discharge loop.

In the embodiments, at least one electrical cabinet is selected from the electrical cabinets that meet the preset charge-discharge condition. Since the batteries of the electrical cabinets that meet the preset charge-discharge condition have a temperature higher than the preset low-temperature threshold, a charge-discharge loop formed with the electrical cabinets that meet the preset charge-discharge condition and the target electrical cabinet that needs to be heated helps improve the efficiency of charging and discharging between the electrical cabinets, and further improves the efficiency of heating batteries in the plurality of electrical cabinets.

In some embodiments, the controlling on/off of power devices in voltage converters of the plurality of candidate electrical cabinets to form a charge loop and a discharge loop that are alternately switched includes:
determining, based on the plurality of candidate electrical cabinets, candidate electrical cabinets to be included in each of at least one charge-discharge loop to be formed, the each charge-discharge loop including at least one target electrical cabinet that meets the preset heating condition; and
controlling on/off of the power devices in the voltage converters of the candidate electrical cabinets included in each charge-discharge loop separately, to form a charge loop and a discharge loop that are alternately switched in each charge-discharge loop.

In the embodiments, the system controller determines electrical cabinets to be included in each charge-discharge loop to be constructed, and controls on/off of the power devices of the voltage converter in the electrical cabinet included in each charge-discharge loop, thereby implementing charging and discharging between electrical cabinets in each charge-discharge loop to simultaneously heat batteries of the plurality of electrical cabinets.

In some embodiments, the determining, based on the plurality of candidate electrical cabinets, candidate electrical cabinets to be included in each of at least one charge-discharge loop to be formed includes:
determining to form one charge-discharge loop and dividing the plurality of candidate electrical cabinets into a first electrical cabinet set and a second electrical cabinet set; and determining the first electrical cabinet set and the second electrical cabinet set as two sets of electrical cabinets in the one charge-discharge loop.

In some embodiments, the determining, based on the plurality of candidate electrical cabinets, candidate electrical cabinets to be included in each of at least one charge-discharge loop to be formed includes:
determining to form multiple charge-discharge loops, the number of the multiple charge-discharge loops being less than or equal to the number of the target electrical cabinets; dividing the plurality of candidate electrical cabinets into multiple sets of electrical cabinets, each including at least two candidate electrical cabinets; and determining the multiple sets of electrical cabinets as the candidate electrical cabinets to be included in each of the multiple charge-discharge loops, respectively.

In the embodiments, the system controller can flexibly determine the electrical cabinets to be included in the charge-discharge loop to be constructed, and then control each charge-discharge loop to alternately form a charge loop and a discharge loop based on the determined electrical cabinets included in each charge-discharge loop, to implement simultaneous heating of the batteries in the electrical cabinets included in the each charge-discharge loop, improving the heating efficiency.

In some embodiments, the controlling on/off of the power devices in the voltage converters of the candidate electrical cabinets included in each charge-discharge loop separately, to form a charge loop and a discharge loop that are alternately switched in each charge-discharge loop includes:
sending the heating instruction to voltage converters of electrical cabinets in a first charge-discharge loop, the first charge-discharge loop being any charge-discharge loop in the each charge-discharge loop; and
controlling, based on the heating instruction, the formation of a charge loop and a discharge loop that are alternately switched in the first charge-discharge loop.

In the embodiments, the system controller sends the heating instruction to the voltage converters of the electrical cabinets in the first charge-discharge loop, so that the voltage converters can control on/off of their own power devices based on the heating instruction and then form a charge loop and a discharge loop that are alternately switched in the first charge-discharge loop, to implement simultaneous heating of the batteries of the electrical cabinets included in the first charge-discharge loop. In this way, the heating efficiency is improved, temperatures of under-temperature batteries are increased, and the charge-discharge performance of the batteries is improved.

In some embodiments, the sending the heating instruction to voltage converters of electrical cabinets in a first charge-discharge loop includes:
sending the heating instruction to the voltage converter of each electrical cabinet in the first charge-discharge loop.

In the embodiments, the system controller can send the heating instruction to the voltage converter of each electrical cabinet in the first charge-discharge loop, so that the voltage converters of the electrical cabinets directly obtain the heating instruction, construct the first charge-discharge loop based on the heating instruction, and control their respective battery to charge and discharge based on the heating instruction.

In some embodiments, the sending the heating instruction to voltage converters of electrical cabinets in a first charge-discharge loop includes:
sending the heating instruction to the voltage converter of a target electrical cabinet in the first charge-discharge loop; and forwarding the heating instruction to voltage converters of other electrical cabinets in the first charge-discharge loop through the voltage converter of the target electrical cabinet.

In the embodiments, the system controller may alternatively send the heating instruction only to the voltage converter of the target electrical cabinet in the first charge-discharge loop, and forward the heating instruction to voltage converters of other electrical cabinets in the first charge-discharge loop through the voltage converter of the target electrical cabinet. This provides another implementation for sending the heating instruction and saves data traffic of the system controller.

In some embodiments, the first charge-discharge loop includes a first electrical cabinet subset and a second electrical cabinet subset, the battery power corresponding to the first electrical cabinet subset being greater than the battery power corresponding to the second electrical cabinet subset.

The controlling, based on the heating instruction, the formation of a charge loop and a discharge loop that are alternately switched in the first charge-discharge loop includes:
controlling in a first stage, based on the heating instruction, the formation of a loop in which batteries of electrical cabinets in the first electrical cabinet subset charge batteries of electrical cabinets in the second electrical cabinet subset; and
controlling in a second stage the formation of a loop in which the batteries of the electrical cabinets in the second electrical cabinet subset charge the batteries of the electrical cabinets in the first electrical cabinet subset.

In the embodiments, with on/off of the power devices in the voltage converters being controlled, the batteries in the first electrical cabinet subset and the batteries in the second electrical cabinet subset alternately charge each other, achieving the self-heating of the batteries in the electrical cabinets in the first charge-discharge loop and improving the battery heating efficiency.

In some embodiments, the first charge-discharge loop includes a first electrical cabinet subset and a second electrical cabinet subset, the battery power corresponding to the first electrical cabinet subset being equal to the battery power corresponding to the second electrical cabinet subset.

The controlling, based on the heating instruction, the formation of a charge loop and a discharge loop that are alternately switched in the first charge-discharge loop includes:
controlling in a first stage, based on the heating instruction, the formation of a loop in which the batteries of electrical cabinets in the first electrical cabinet subset charge energy storage elements of the voltage converter in their respective electrical cabinets, respectively;
controlling in a second stage the formation of a loop in which the batteries and the energy storage elements of the voltage converters of the electrical cabinets in the first electrical cabinet subset charge batteries of electrical cabinets in the second electrical cabinet subset;
controlling in a third stage the formation of a loop in which the batteries of the electrical cabinets in the second electrical cabinet subset charge energy storage elements of the voltage converter in their respective electrical cabinets; and
controlling in a fourth stage the formation of a loop in which the batteries and the energy storage elements of the voltage converters of the electrical cabinets in the second electrical cabinet subset charge the batteries of the electrical cabinets in the first electrical cabinet subset.

In the embodiments, with on/off of the power devices in the voltage converters being controlled, the self-heating of the batteries in the electrical cabinets in the first charge-discharge loop is achieved, improving the battery heating efficiency.

In some embodiments, the method further includes:
controlling a duration for the first electrical cabinet subset to charge the second electrical cabinet subset to be shorter than a duration for the second electrical cabinet subset to charge the first electrical cabinet subset when the number of batteries included in the first electrical cabinet subset is greater than the number of batteries included in the second electrical cabinet subset.

In the embodiments, when the number of batteries included in the first electrical cabinet subset is greater than the number of batteries included in the second electrical cabinet subset, the problem of overcharging of the batteries in the second electrical cabinet subset during the process of charging and discharging can be avoided.

In some embodiments, the method further includes:
obtaining electrical parameters of the battery in each electrical cabinet; and
determining whether there exists a target electrical cabinet that meets the preset heating condition based on the electrical parameters of the battery in each electrical cabinet.

In the embodiments, in determining whether a battery meets the preset heating condition based on the electrical parameters of the battery, the battery that needs to be heated due to low temperature can be accurately determined, the problem of battery overdischarging caused by charging and discharging when the power of the battery is insufficient can be avoided, and failure to successfully complete the process of charging and discharging when there is a fault in the electrical cabinet can be avoided.

In some embodiments, after the charging and discharging a battery in the target electrical cabinet based on the charge-discharge loop, the method further includes:
determining whether a preset stop heating condition is met based on the electrical parameters of the battery in each electrical cabinet included in the charge-discharge loop; and
sending a stop heating instruction to the voltage converters of the electrical cabinets in the charge-discharge loop when it is determined that the preset stop heating condition is met.

In the embodiments, during the process of charging and discharging in the charge-discharge loop formed between the electrical cabinets, based on the electrical parameters of the batteries in the electrical cabinets, it is determined in real time whether the preset stop heating condition is met, and the charge-discharge loop is controlled to stop charging and discharging promptly when it is determined that the preset stop heating condition is met. This can avoid safety issues caused by continuous charging and discharging when the battery temperature is abnormal and can also prevent the battery temperature from continuing to rise after reaching the preset required temperature and leading to overheating.

According to a third aspect, an embodiment of this application provides a battery self-heating control apparatus, applied to the energy storage system according to the first aspect. The apparatus includes:
a determining module, configured to determine that there exists at least one target electrical cabinet that meets a preset heating condition; and
a heating module, configured to control a plurality of electrical cabinets including the target electrical cabinet to form a charge-discharge loop, and charge and discharge a battery in the target electrical cabinet based on the charge-discharge loop.

According to a fourth aspect, an embodiment of this application provides an electronic device including a memory, a processor, and a computer program stored in the memory and capable of running on the processor, where when the computer program is executed by the processor, the method according to the second aspect is implemented.

According to a fifth aspect, an embodiment of this application provides a computer-readable storage medium. The computer-readable storage medium has stored thereon a computer program, and when the computer program is run by a processor, the method according to the second aspect is implemented.

According to a sixth aspect, an embodiment of this application provides a computer program product including a computer program, where the computer program is executed by a processor to implement the method according to the second aspect.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific implementations of this application.

### BRIEF DESCRIPTION OF DRAWINGS

To describe the technical solutions in embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a circuit structure diagram of a charge-discharge loop at which a battery is located in an energy storage system in the related art.
FIG. 2 is a schematic structural diagram of an energy storage system in the related art.
FIG. 3 is a schematic structural diagram of an energy storage system improved on basis of FIG. 2 according to an embodiment of this application.
FIG. 4 is a schematic structural diagram of an energy storage system according to an embodiment of this application.
FIG. 5 is another schematic structural diagram of an energy storage system according to an embodiment of this application.
FIG. 6 is a further schematic structural diagram of an energy storage system according to an embodiment of this application.
FIG. 7 is a circuit schematic diagram of a voltage converter with flying capacitors according to an embodiment of this application.
FIG. 8 is a circuit schematic diagram of a voltage converter without flying capacitors according to an embodiment of this application.
FIG. 9 is a flowchart of a battery self-heating control method according to an embodiment of this application.
FIG. 10 is a schematic structural diagram of a circuit of a photovoltaic energy storage system according to an embodiment of this application.
FIG. 11 is a circuit schematic diagram of a charge-discharge loop between two electrical cabinets according to an embodiment of this application.
FIG. 12 is a schematic diagram of current flow direction when battery 1 charges an inductor in the charge-discharge loop shown in FIG. 11.
FIG. 13 is a schematic diagram of current flow direction when battery 1 charges battery 2 in the charge-discharge loop shown in FIG. 11.
FIG. 14 is a schematic diagram of current flow direction when battery 2 charges an inductor in the charge-discharge loop shown in FIG. 11.
FIG. 15 is a schematic diagram of current flow direction when battery 2 charges battery 1 in the charge-discharge loop shown in FIG. 11.
FIG. 16 is another circuit schematic diagram of a charge-discharge loop between two electrical cabinets according to an embodiment of this application.
FIG. 17 is a schematic diagram of current flow direction when battery 1 charges an inductor in the charge-discharge loop shown in FIG. 16.
FIG. 18 is a schematic diagram of current flow direction when battery 1 charges battery 2 in the charge-discharge loop shown in FIG. 16.
FIG. 19 is a schematic diagram of current flow direction when battery 2 charges an inductor in the charge-discharge loop shown in FIG. 16.
FIG. 20 is a schematic diagram of current flow direction when battery 2 charges battery 1 in the charge-discharge loop shown in FIG. 16.
FIG. 21 is a schematic flowchart of a battery self-heating control method in a photovoltaic energy storage system according to an embodiment of this application.
FIG. 22 is a schematic structural diagram of a battery self-heating control apparatus according to an embodiment of this application.
FIG. 23 is a schematic structural diagram of an electronic device according to an embodiment of this application.

### DESCRIPTION OF EMBODIMENTS

The following further describes implementations of this application in detail with reference to the accompanying drawings and embodiments. The detailed description of the following embodiments and the accompanying drawings are intended to illustrate the principle of this application rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly perpendicular, but within an allowable range of error. "Parallel" is not strictly parallel, but within the allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the development and utilization of new energy, the primary focus is on energy storage. In related art, new energy is usually converted into electric energy for storage. For example, new energy such as solar energy, wind energy, or nuclear energy is converted into electric energy, and the converted electric energy is stored in batteries of a plurality of electrical cabinets. While at low temperatures, the charging and discharging performance of batteries is significantly degraded, and this has a significant impact on the energy conversion of these energy storage systems. Therefore, it is necessary to heat the batteries in low-temperature environments.

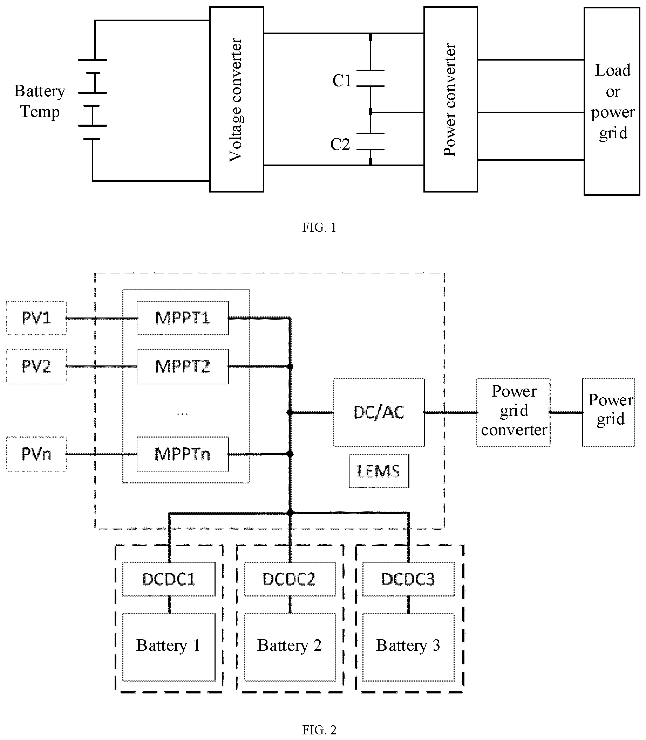

An electrical cabinet in an energy storage system of the related art includes a battery and a voltage converter, where the battery is connected to a high-voltage bus through the voltage converter and connected to an electrical load or power grid through a power converter, where the high-voltage bus is connected in parallel with bus capacitors. FIG. 1 shows a circuit structure at which battery Temp is located in an energy storage system in the related art, where C1 and C2 are bus capacitors. When the temperature of battery Temp is below a specific temperature, battery Temp needs to be heated. In related art, a charge-discharge loop is formed by battery Temp, a voltage converter, a power converter, and bus capacitors. At a stage, battery Temp charges the bus capacitors; and at a next stage, the bus capacitors charge battery Temp. The charging and discharging at these two stages alternate, thereby forming an alternating current flowing through battery Temp and causing the internal resistance of battery Temp to generate heat to implement self-heating of battery Temp.

However, during the research of many battery heating solutions for energy storage systems, the inventors of this application found that the energy storage systems usually include many electrical cabinets, each being connected in parallel on the high-voltage bus. When the temperature of batteries of a plurality of electrical cabinets drops to a specific temperature and the batteries require heating, in the related art, the batteries of the plurality of electrical cabinets that require heating need to be heated sequentially at different times. This method of sequentially heating all the batteries that require heating is time-consuming and inefficient.

For example, a photovoltaic energy storage system using solar energy is used as an example for description. In the related art, the photovoltaic energy storage system includes a plurality of photovoltaic sources, a solar controller corresponding to each of the photovoltaic sources, a plurality of electrical cabinets, power converters, and a system controller.

FIG. 2 shows a schematic structural diagram of a photovoltaic energy storage system. FIG. 2 illustrates photovoltaic sources PV1, PV2, ..., PVn, and solar controllers MPPT1, MPPT2, ..., MPPTn connected to each of the photovoltaic sources respectively. The electrical cabinet includes a voltage converter and a battery, with the voltage converter connected to the battery. The voltage converter may be a direct current to direct current DCDC converter, and the battery may be a battery module or battery pack, or the like. FIG. 2 schematically shows three electrical cabinets, each including DCDC1 and battery 1, DCDC2 and battery 2, DCDC3 and battery 3, respectively.

In the foregoing photovoltaic energy storage system, the voltage converter in each electrical cabinet, each solar controller, and the power converter are all collinearly connected, and the power converter may be a direct current to alternating current DC/AC converter. As shown in FIG. 2, the power converter can also be connected to the power grid through a power grid converter. The system controller may be a LEMS (Local Energy Management System, local energy management system), as shown in FIG. 2.

As shown in FIG. 2, in the related art, if the batteries in the three electrical cabinets all have a temperature below the threshold and a charge-discharge loop between the battery and the bus capacitors shown in FIG. 1 is used to heat the batteries, the batteries in these three electrical cabinets can only be heated sequentially, resulting in very low heating efficiency.

Based on this, the inventors of this application, through in-depth research, have designed an energy storage system and a battery self-heating control method applied to the energy storage system, where a switch module is provided between the electrical cabinets and the high-voltage bus in the energy storage system, and the electrical cabinets are collinearly connected. When there exists an electrical cabinet with the battery temperature below the threshold, the connection between the electric al cabinets and the high-voltage bus is disconnected through the switch module, forming a charge-discharge loop among the electrical cabinets. With this charge-discharge loop among the electrical cabinets, heating the batteries with temperatures below the threshold is implemented.

In this application, a charge-discharge loop is formed among the electrical cabinets. Through charging and discharging between the electrical cabinets, an alternating current flowing through the batteries in the electrical cabinets is formed, causing the internal resistance of the batteries to generate heat. This can implement simultaneous heating of the batteries of a plurality of electrical cabinets, shortening the time required to heat the batteries of the plurality of electrical cabinets and improving the efficiency of heating the batteries in the electrical cabinets of the energy storage system.

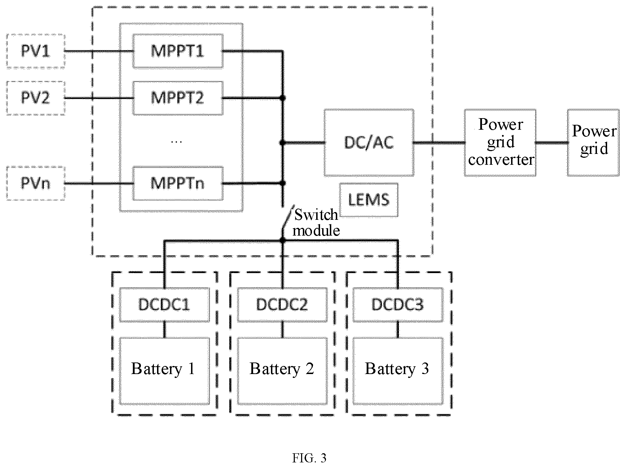

The battery self-heating control method provided in the embodiments of this application can be applied to any energy storage system that includes a plurality of electrical cabinets, such as energy storage systems utilizing solar energy, wind energy, nuclear energy, hydropower, geothermal energy, fossil energy, or the like. A switch module is provided between the electrical cabinets and the high-voltage bus in the energy storage system in the embodiments of this application. The circuit structure as shown in FIG. 3 is on basis of the circuit structure shown in FIG. 2, with a switch module provided between the three electrical cabinets and the high-voltage bus. Thus, when any battery in these three electrical cabinets needs to be heated, the switch module can be disconnected, and a charge-discharge loop is formed between these three electrical cabinets, thereby enabling the implementation of simultaneous heating of the batteries in the plurality of electrical cabinets and improving the battery heating efficiency.

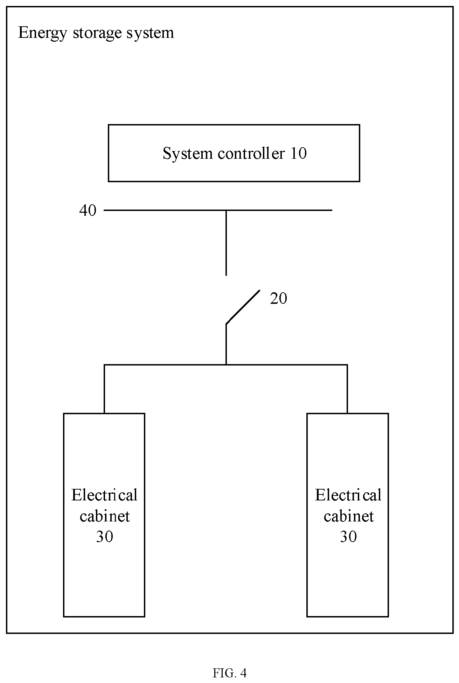

An embodiment of this application provides an energy storage system. Referring to FIG. 4, the energy storage system includes a system controller 10, a switch module 20, and a plurality of electrical cabinets 30, where two electrical cabinets 30 are schematically shown in FIG. 4.

The plurality of electrical cabinets 30 are connected in parallel, one end of the switch module 20 is connected to the high-voltage bus 40, and the other end is connected to a connection point of the plurality of parallel electrical cabinets 30. The system controller 10 is communicatively connected to the switch module 20 and each electrical cabinet 30, respectively. The system controller 10 is configured to control the formation of a charge-discharge loop among the plurality of electrical cabinets 30 when there exists an electrical cabinet 30 among the multiple electrical cabinets 30 that meets a preset heating condition.

The plurality of electrical cabinets 30 are connected in parallel in such a way that the plurality of electrical cabinets 30 can be collinearly connected to a single line and then connected from the single line to a high-voltage bus. Alternatively, each electrical cabinet 30 can be connected to the high-voltage bus through a separate line.

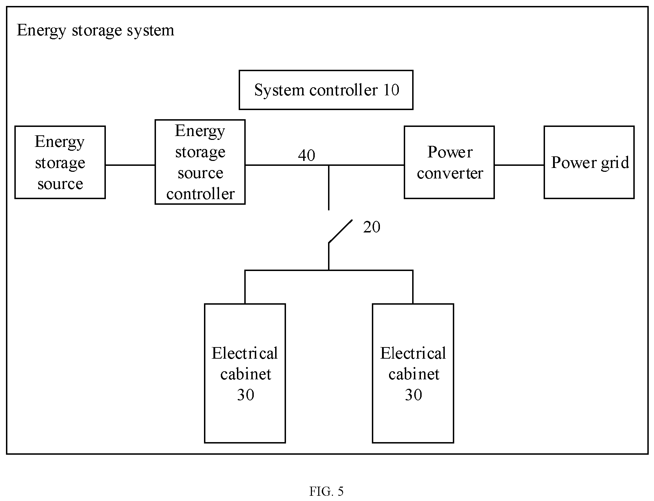

In FIG. 4, only the circuit connection part is shown but not the communication connection lines. The communication connection between the system controller 10 and the switch module 20 and each electrical cabinet 30 may be a wired connection or a wireless connection. FIG. 4 only schematically shows the high-voltage bus 40. In practical applications, as shown in FIG. 5, the high-voltage bus 40 can also be sequentially connected to an energy storage source controller and an energy storage source, and further connected to a power converter and a power grid. The energy storage source controller, the power converter, and one end of the connection between the switch module 20 and the high-voltage bus 40 are collinearly connected. The foregoing energy storage source may be a photovoltaic source, wind turbine, or the like, and the power converter may be a DCAC converter.

The switch module 20 is a signal-controllable switching transistor. The switch module 20 may specifically be a bus contactor, a signal-controllable IGBT (Insulated Gate Bipolar Transistor, insulated gate bipolar transistor) or MOS (MOSFET, Field-Effect Transistor) transistor, or the like.

The preset heating condition may include the battery temperature being lower than a preset low-temperature threshold, the battery power being greater than a preset power threshold, and no faults existing in the electrical cabinet 30. The preset low-temperature threshold may be -10°C, -20°C, -30°C, or the like. The preset power threshold is a minimum power required to support charging and discharging of a battery.

In this application, when it is determined that there is an electrical cabinet 30 that meets the preset heating condition, the switch module 20 is disconnected to suspend the transmission of electric energy from each electrical cabinet 30 to the power grid, and the energy storage source also suspends the storage of electric energy in the electrical cabinets 30. A charge-discharge loop is formed among a plurality of electrical cabinets 30 to allow for charging and discharging between the electrical cabinets 30, thereby forming an alternating current flowing through batteries in the plurality of electrical cabinets 30. This causes the internal resistance of the batteries in the plurality of electrical cabinets 30 to generate heat simultaneously, achieving simultaneous heating of the batteries in the plurality of electrical cabinets 30 and improving the heating efficiency.

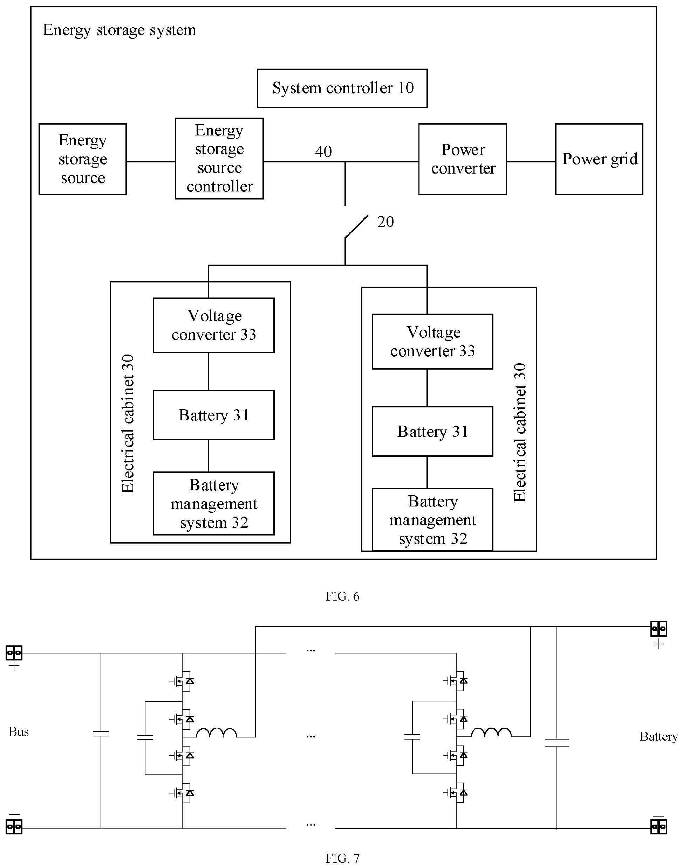

As shown in FIG. 6, the electrical cabinet 30 includes a battery 31, a battery management system 32, and a voltage converter 33. The battery management system 32, the system controller 10, and the voltage converter 33 are all communicatively connected. The communication connection is not shown in FIG. 6. The communication connection can be a wired connection or a wireless connection. The battery 31 is electrically connected to the switch module 20 through the voltage converter 33.

Each electrical cabinet 30 in the energy storage system has the structure shown in FIG. 6. The voltage converter 33 of each electrical cabinet 30 is electrically connected to the switch module 20 and is communicatively connected to the system controller 10. When there is an electrical cabinet 30 that meets the preset heating condition, the switch module 20 can be used to disconnect all electrical cabinets 30 from the high-voltage bus 40, thereby enabling the formation of a charge-discharge loop among a plurality of electrical cabinets 30 to implement charging and discharging between the electrical cabinets 30.

For the battery management system 32 in each electrical cabinet 30, the battery management system 32 is used to detect electrical parameters of the battery 31 in the electrical cabinet 30 to which the battery management system 32 belongs and transmit the electrical parameters of the battery 31 to the system controller 10. The electrical parameters include the temperature, state of charge SOC, voltage, current, and the like of the battery 31. The system controller 10 receives the electrical parameters uploaded by the battery management system 32 of each electrical cabinet 30, determines for each electrical cabinet 30 whether the preset heating condition is met based on each electrical parameter, and controls the switch module 20 to disconnect when an electrical cabinet 30 is determined to meet the preset heating condition.

The battery management system 32 may periodically detect the electrical parameters of the corresponding battery 31 and upload them to the system controller 10. The system controller 10, after receiving the electrical parameters, compares the temperature of the battery 31 included in the electrical parameters with the preset low-temperature threshold. If the temperature of the battery 31 is greater than the preset low-temperature threshold, the battery 31 is determined to not meet the preset heating condition. If the temperature of the battery 31 is less than or equal to the preset low-temperature threshold, the system controller 10 further determines whether the power of the battery 31 is greater than the preset power threshold. If the power of the battery 31 is less than or equal to the preset power threshold, it indicates that the power of the battery 31 is too low to support charging and discharging, and the battery 31 is determined to not meet the preset heating condition. If the power of the battery 31 is determined to be greater than the preset power threshold, the system controller 10 further checks whether there are any faults in the electrical cabinet 30 to which the battery 31 belongs. The fault may include a fault in the voltage converter 33, a fault in the battery 31, or a fault in the battery management system 32. If a fault is detected in the electrical cabinet 30 to which the battery 31 belong s, the battery 31 is determined to not meet the preset heating condition. If the temperature of the battery 31 is determined to be less than or equal to the preset low-temperature threshold, the power of the battery 31 power is greater than the preset power threshold, and no faults exist in the electrical cabinet 30 to which the battery 31 belongs, the battery 31 is determined to meet the preset heating condition.

When determining that there exists a battery 31 that meets the preset heating condition in the batteries 31 in the electrical cabinets 30, the system controller 10 sends a control instruction for controlling the disconnection of the switch module 20 to the switch module 20. The switch module 20 disconnects upon the triggering of this control instruction.

Whether the temperature of the battery 31 and the power of the battery 31 meet the preset heating condition is determined based on the electrical parameters of the battery 31, the battery 31 that needs to be heated can be accurately determined, and the problem of overdischarging caused by charging and discharging when the power of the battery 31 is insufficient can be avoided. When it is determined that there exists a battery 31 that meets the preset heating condition, the switch module 20 is controlled to disconnect, creating a condition for the subsequent formation of a charge-discharge loop among a plurality of electrical cabinets 30 to enable charging and discharging between the electrical cabinets 30.

The system controller 10, based on the electrical parameters of the batteries 31 in the electrical cabinets 30, determines that an electrical cabinet 30 meets the preset heating conditions and sends a heating instruction to at least one electrical cabinet 30. The at least one electrical cabinet 30 includes the electrical cabinet 30 that meets the preset heating condition. The at least one electrical cabinet 30 is configured to construct a charge-discharge loop among the electrical cabinets 30 based on the heating instruction and control batteries 31 in the charge-discharge loop to alternately charge and discharge.

The foregoing heating instruction is used to indicate electrical cabinets 30 to form a charge-discharge loop and carry out charging and discharging based on the formed charge-discharge loop. The heating instruction may include identification information of electrical cabinets 30 for forming a charge-discharge loop, stage indication information for each stage of charging and discharging, or the like. The identification information of an electrical cabinet 30 may be a device serial number or a MAC (Media Access Control Address, a physical address), or the like, that is used to uniquely identify the electrical cabinet 30. The stage indication information is used to indicate charging and discharging stages included in the charge-discharge loop and information such as duration and charging and discharging currents for each stage. The charging and discharging stages included in the charge-discharge loop may include one stage in which a battery 31 in a first electrical cabinet 30 charges a battery 31 in a second electrical cabinet 30 in and a next stage in which the battery 31 in the second electrical cabinet 30 charges the battery 31 in the first electrical cabinet 30. Alternatively, the charging and discharging stages may include one stage in which a battery 31 in a first electri cal cabinet 30 charges energy storage elements in a voltage converter 33 of the first electrical cabinet 30, a next stage in which the battery 31 and the energy storage elements in the voltage converter 33 of the first electrical cabinet 30 together charge a battery 31 in a second electrical cabinet 30, a further next stage in which the battery 31 in the second electrical cabinet 30 charges energy storage elements in a voltage converter 33 of the second electrical cabinet 30, and a yet further next stage in which the battery 31 and the energy storage elements in the voltage converter 33 of the second electrical cabinet 30 together charge the battery 31 in the first electrical cabinet 30.

When it is determined that there exists a battery 31 that meets the preset heating condition, the heating instruction is sent to the corresponding electrical cabinets 30. The electrical cabinets 30 then construct a charge-discharge loop including a plurality of electrical cabinets 30 based on the heating instruction, and alternately carry out charging and discharging in the constructed charge-discharge loop based on the heating instruction to implement charging and discharging between the electrical cabinets 30. This enables simultaneous heating of the plurality of electrical cabinets 30, improving the heating efficiency.

In some embodiments of this application, the voltage converter 33 may include at least one bridge arm with flying capacitors and at least one energy storage element, the bridge arms corresponding one-to-one with the energy storage elements. One end of the energy storage element is connected to the positive electrode of a battery 31 in an electrical cabinet 30 to which the voltage converter 33 belongs, and the other end of the energy storage element is connected to a connection point between an upper bridge arm and a lower bridge arm of a bridge arm corresponding to the energy storage element. The energy storage element may include at least one inductor and/or capacitor or other elements capable of storing electric energy.

FIG. 7 shows a circuit schematic diagram of a voltage converter 33 with flying capacitors. FIG. 7 schematically shows two bridge arms. In practical applications, the voltage converter 33 can have only one bridge arm or any number of bridge arms greater than two. In FIG. 7, the bridge arms are connected in parallel, one end of each bridge arm and the positive electrode end of the high-voltage bus 40 are collinearly connected, and the other end of each bridge arm, the negative electrode end of the high-voltage bus 40, and the negative electrode of the battery 31 in the electrical cabinet 30 to which the voltage converter 33 belongs are collinearly connected. The energy storage elements connected to the bridge arms are all connected to the positive electrode of the battery 31 in the electrical cabinet 30 to which the voltage converter 33 belongs. In FIG. 7, the energy storage elements are schematically shown as inductors. In FIG. 7, four sequentially connected switching transistors are schematically shown for each bridge arm. One end of a flying capacitor is connected between first two switching transistors, and the other end is connected between last two switching transistors. To be specific, the flying capacitor is connected in parallel with two middle switching transistors of the four switching transistors in the bridge arm.

The voltage converter 33 may have a flying capacitor and may include one or more bridge arms, so that the formed charge-discharge loop between the electrical cabinets 30 can have a variety of possible circuit structures.

In some other embodiments, the voltage converter 33 includes at least one bridge arm without flying capacitors and at least two energy storage elements, each bridge arm being connected to two energy storage elements, respectively. Each bridge arm includes at least four sequentially connected switching transistors; and the positive and negative electrodes of a battery 31 in an electrical cabinet 30 to which the voltage converter 33 belongs are respectively connected to two energy storage elements connected to the bridge arm.

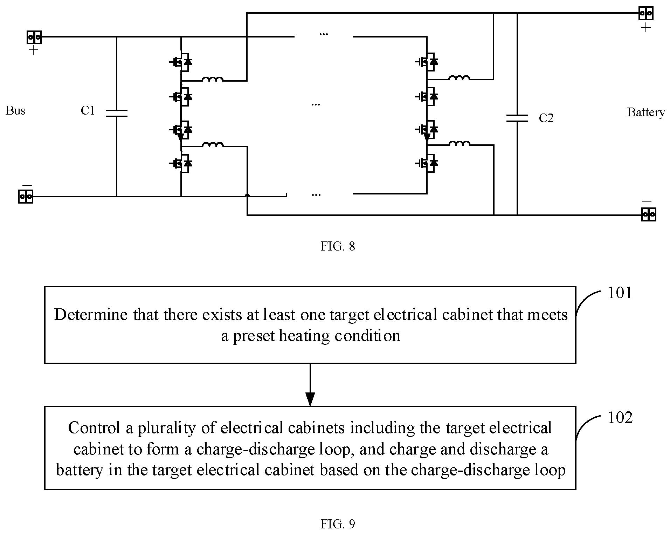

FIG. 8 shows a circuit schematic diagram of a voltage converter 33 without flying capacitors. FIG. 8 schematically shows two bridge arms. In practical applications, the voltage converter 33 can have only one bridge arm or any number of bridge arms greater than two. In FIG. 8, the bridge arms are connected in parallel, one end of each bridge arm and the positive electrode end of the high-voltage bus 40 are collinearly connected, and the other end of each bridge arm and the negative electrode end of the high-voltage bus 40 are collinearly connected. In FIG. 8, only four sequentially connected switching transistors are schematically shown for the bridge arm, and each bridge arm is connected to two energy storage elements. In FIG. 8, the energy storage elements are schematically shown as inductors. One end of one inductor is connected to a connection point of first two switching transistors of the bridge arm, and the other end of the inductor is connected to the positive electrode of the battery 31 in the electrical cabinet 30 to which the voltage converter 33 belongs. One end of another inductor is connected to a connection point of last two switching transistors of the bridge arm, and the other end of the another inductor is connected to the negative electrode of the battery 31 in the electrical cabinet 30 to which the voltage converter 33 belongs.

In the embodiments, the voltage converter 33 may not have a flying capacitor and may include one or more bridge arms, so that the formed charge-discharge loop between the electrical cabinets 30 can have a variety of possible circuit structures.

In the voltage converters 33 with or without flying capacitors, a switch module 20 is connected between each bridge arm and the positive electrode end of the high-voltage bus 40. When it is necessary to heat a battery 31 in an electrical cabinet 30, the switch module 20 is first disconnected, thereby disconnecting the circuit between the voltage converter 33 and the battery 31 in the electrical cabinet 30 and the high-voltage bus 40, creating a condition for the subsequent construction of a charge-discharge loop among the electrical cabinets 30.

In the embodiments of this application, a switch module is provided between the electrical cabinets and the high-voltage bus in the energy storage system, and the system controller is communicatively connected to the voltage converters and the battery management systems in the electrical cabinets. When it is determined based on the electrical parameters of batteries in the electrical cabinets that there is an electrical cabinet that meets the preset heating condition, the switch module is disconnected to suspend the transmission of electric energy from each electrical cabinet to the power grid, and the energy storage source also suspends the storage of electric energy in the electrical cabinets. A charge-discharge loop is formed among a plurality of electrical cabinets to allow for charging and discharging between the electrical cabinets, thereby forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

An embodiment of this application provides a battery self-heating control method. The method is applied to the energy storage system provided in the foregoing embodiments. Referring to the flowchart of the battery self-heating control method shown in FIG. 9, the method specifically includes the following steps.

Step 101: Determine that there exists at least one target electrical cabinet that meets a preset heating condition.

The preset heating condition may include the battery temperature being lower than a preset low-temperature threshold, the battery power being greater than a preset power threshold, and no faults existing in the electrical cabinet to which the battery belongs. The preset low-temperature threshold may be -10°C, -20°C, -30°C, or the like. The preset power threshold is a minimum power required to support charging and discharging of a battery. The switch module is a signal-controllable switching transistor. The switch module may specifically be a bus contactor, a signal-controllable IGBT or MOS transistor, or the like.

Step 102: Control a plurality of electrical cabinets including the target electrical cabinet to form a charge-discharge loop, and charge and discharge a battery in the target electrical cabinet based on the charge-discharge loop.

In this application, when it is determined that there is an electrical cabinet that meets the preset heating condition, the switch module is disconnected to suspend the transmission of electric energy from each electrical cabinet to the power grid, and the energy storage source also suspends the storage of electric energy in the electrical cabinets, creating a condition for the subsequent construction of a charge-discharge loop among the electrical cabinets. A charge-discharge loop is formed among a plurality of electrical cabinets to enable charging and discharging between the electrical cabinets, thereby forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

The circuit structure on which the battery self-heating control method provided in the embodiments of this application is based is the structure of the energy storage system shown in FIG. 4. In this energy storage system, each electrical cabinet includes a battery, a battery management system, and a voltage converter. The battery management system is communicatively connected to the voltage converter and the system controller, and the voltage converter is also communicatively connected to the system controller. The battery management system is used to detect electrical parameters of the battery, and the electrical parameters include the temperature, state of charge SOC, voltage or current, and the like of the battery.

During the operation of the energy storage system, for each electrical cabinet, the battery management system in each electrical cabinet periodically detects the electrical parameters of the battery in the electrical cabinet and sends the detected electrical parameters to the system controller. The period for the battery management system to detect and upload the electrical parameters may be 1 minute, 5 minutes, 10 minutes, 30 minutes, 1 hour, 2 hours, or the like. The specific value of the period is not limited in the embodiments of this application and can be set as required in practical applications.

After obtaining the electrical parameters of the batteries in the electrical cabinets, the system controller determines whether there exists a target electrical cabinet that meets the preset heating condition based on the electrical parameters of the battery in each electrical cabinet. Specifically, for each electrical cabinet, the system controller parses the temperature and state of charge SOC of the battery from the electrical parameters corresponding to the electrical cabinet and determines whether the temperature of the battery is lower than a preset low-temperature threshold. If yes, the system controller further determines whether the SOC of the battery is greater than a preset power threshold. If it is determined that the temperature of the battery is lower than the preset low-temperature threshold and the SOC is greater than the preset power threshold, the system controller further checks whether there are any faults in the electrical cabinet to which the battery belongs. If it is determined that there is no fault in the electrical cabinet to which the battery belongs, the electrical cabinet is determined to be a target electrical cabinet that meets the preset heating condition. If it is determined that the temperature of the battery is higher than the preset low-temperature threshold, or although it is determined that the temperature of the battery is lower than the preset low-temperature threshold, the SOC of the battery is less than or equal to the preset power threshold, or a fault is detected in the electrical cabinet to which the battery belongs, the electrical cabinet is determined to not meet the preset heating condition.

In determining whether a battery meets the preset heating condition based on the electrical parameters of the battery, the battery that needs to be heated due to low temperature can be accurately determined, the problem of battery overdischarging caused by charging and discharging when the power of the battery is insufficient can be avoided, and failure to successfully complete the process of charging and discharging when there is a fault in the electrical cabinet can be avoided.

When the target electrical cabinet that meets the preset heating condition is determined in the foregoing manner, the system controller sends a control instruction to the switch module, and the control instruction triggers the switch module to disconnect. After the switch module is disconnected, the subsequent charging or discharging currents for the electrical cabinet does not flow to the high-voltage bus but to other electrical cabinets forming the charge-discharge loop, thereby creating a structural condition for charging and discharging between the electrical cabinets.

When or after controlling the switch module to disconnect, the system controller controls a plurality of electrical cabinets, including the target electrical cabinet, to form a charge-discharge loop. Specifically, the system controller determines a plurality of candidate electrical cabinets for forming a charge-discharge loop, the plurality of candidate electrical cabinets including the target electrical cabinet, and controls on/off of power devices in voltage converters of the plurality of candidate electrical cabinets to form a charge loop and a discharge loop that are alternately switched.

The system controller determines the electrical cabinets that form the charge-discharge loop, and controls on/off of power devices in voltage converters of these electrical cabinets, forming a charge-discharge loop among these electrical cabinets to implement charging and discharging between these electrical cabinets. This can cause the internal resistance of the batteries in the plurality of electrical cabinets to generate heat simultaneously, improving the efficiency of heating batteries of the plurality of electrical cabinets in the energy storage system.

For the step of determining a plurality of candidate electrical cabinets for forming a charge-discharge loop, in some embodiments, if the system controller determines that there are a plurality of target electrical cabinets that meet the preset heating condition, the plurality of target electrical cabinets can be directly determined as a plurality of candidate electrical cabinets for forming a charge-discharge loop. In other words, the charge-discharge loop is formed among the plurality of target electrical cabinets that need to be heated.

In some other embodiments, if there is one target electrical cabinet that meets the preset heating condition, at least one electrical cabinet needs to be selected from the electrical cabinets that meet a preset charge-discharge condition to form a charge-discharge loop between the selected at least one electrical cabinet and the target electrical cabinet. The preset charge-discharge condition includes the battery temperature being higher than a preset low-temperature threshold and the battery power being greater than a preset power threshold, that is, the battery has enough power to support charging and discharging.

For the case where there are a plurality of target electrical cabinets that meet the preset heating condition, it is also possible to select at least one electrical cabinet from the electrical cabinets that meet the preset charge-discharge condition to form at least one charge-discharge loop among the selected at least one electrical cabinet and the plurality of target electrical cabinets. Since the charging and discharging performance of the battery in the target electrical cabinet with a battery temperature lower than the preset low-temperature threshold is affected by low temperature, while the charging and discharging performance of the battery in the electrical cabinet with a temperature higher than the preset low-temperature threshold is normal, a charge-discharge loop formed with the electrical cabinets that meet the preset charge-discharge condition and the target electrical cabinet that needs to be heated helps improve the efficiency of charging and discharging based on the charge-discharge loop, and further improves the efficiency of heating batteries in the plurality of electrical cabinets.

For the case where the electrical cabinets that meet the preset charge-discharge condition are needed to form a charge-discharge loop with the target electrical cabinet, the system controller first determines the electrical cabinets that meet the preset charge-discharge condition from the remaining electrical cabinets based on electrical parameters of batteries in remaining electrical cabinets except the target electrical cabinet, that is, determining electrical cabinets with the battery temperature higher than the preset low-temperature threshold and the battery power greater than the preset power threshold. Then, at least one electrical cabinet is selected from the electrical cabinets that meet the preset charge-discharge condition; and the target electrical cabinet and the selected at least one electrical cabinet are determined as the plurality of candidate electrical cabinets for forming a charge-discharge loop.

The number of at least one electrical cabinet selected can be equal to or not equal to the number of electrical cabinets that meet the preset heating condition.

The method of selecting at least one electrical cabinet from the electrical cabinets that meet the preset charge-discharge condition can be to randomly select at least one electrical cabinet, or select at least one electrical cabinet with the lowest battery temperature or the greatest battery power from the electrical cabinets that meet the preset charge-discharge condition.

In randomly selecting at least one electrical cabinet from the electrical cabinets that meet the preset charge-discharge condition, the method of randomly selecting can reduce the computational load of the system controller and quickly select the required electrical cabinets. While selecting at least one electrical cabinet with the lowest battery temperature from the electrical cabinets that meet the preset charge-discharge condition helps heat these lower temperature batteries of the electrical cabinets subsequently after the charge-discharge loop is formed, raising the temperature of the batteries in these electrical cabinets, and improving the charging and discharging performance of the batteries in these electrical cabinets. Selecting at least one electrical cabinet with the greatest battery power from the electrical cabinets that meet the preset charge-discharge condition can avoid the occurrence of battery over-discharge during the process of charging and discharging in the subsequently formed charge-discharge loop. Since the batteries of the electrical cabinets that meet the preset charge-discharge condition have a temperature higher than the preset low-temperature threshold, a charge-discharge loop formed with the electrical cabinets that meet the preset charge-discharge condition and the target electrical cabinet that needs to be heated helps improve the efficiency of charging and discharging between the electrical cabinets, and further improves the efficiency of heating batteries in the plurality of electrical cabinets.

After determining the plurality of candidate electrical cabinets for forming a charge-discharge loop, the system controller further determines, based on the plurality of candidate electrical cabinets, candidate electrical cabinets to be included in each of at least one charge-discharge loop to be formed, the each charge-discharge loop including at least one target electrical cabinet that meets the preset heating condition. In other words, the system controller needs to determine the number of charge-discharge loops to be constructed and which electrical cabinets are included in each charge-discharge loop to be formed. Afterwards, the system controller controls on/off of the power devices in the voltage converters of the candidate electrical cabinets included in each charge-discharge loop separately, to form a charge loop and a discharge loop that are alternately switched in each charge-discharge loop.

The system controller determines electrical cabinets to be included in each charge-discharge loop to be constructed, and controls on/off of the power devices of the voltage converter in the electrical cabinet included in each charge-discharge loop, thereby implementing charging and discharging between electrical cabinets in each charge-discharge loop to simultaneously heat batteries of the plurality of electrical cabinets.

In some embodiments, the system controllers can determine to form only one charge-discharge loop and divide the plurality of candidate electrical cabinets into a first electrical cabinet set and a second electrical cabinet set; and determine the first electrical cabinet set and the second electrical cabinet set as two sets of electrical cabinets in the one charge-discharge loop. In other words, only one charge-discharge loop is formed, and in this charge-discharge loop, batteries in the first electrical cabinet set and batteries in the second electrical cabinet set charge and discharge with each other.

If the number of determined candidate electrical cabinets is an even, the number of electrical cabinets included in the divided first electrical cabinet set and second electrical cabinet set can be equal. If the number of candidate electrical cabinets is an odd, the number of electrical cabinets included in the divided first electrical cabinet set and second electrical cabinet set is not equal, with one electrical cabinet set containing one more electrical cabinet than another electrical cabinet set in division, minimizing the gap between the number of electrical cabinets in the first electrical cabinet set and the second electrical cabinet set so that the subsequent charging and discharging between the two electrical cabinet sets can be more balanced.

In some other embodiments, the system controller can alternatively determine to form multiple charge-discharge loops, the number of the multiple charge-discharge loops being less than or equal to the number of the target electrical cabinets; divide the plurality of candidate electrical cabinets into multiple sets of electrical cabinets, each including at least two candidate electrical cabinets; and determine the multiple sets of electrical cabinets as the candidate electrical cabinets to be included in each of the multiple charge-discharge loops, respectively.

If the number of the multiple charge-discharge loops is equal to the number of the target electrical cabinets, each charge-discharge loop can include one target electrical cabinet. If the number of the multiple charge-discharge loops is less than the number of the target electrical cabinets, one charge-discharge loop can include a plurality of target electrical cabinets. For each charge-discharge loop, the number of electrical cabinets included in the charge-discharge loop may be even or odd. For the case of including an even number of electrical cabinets, the electrical cabinets included in the charge-discharge loop can be evenly divided into two sets, and subsequent charging and discharging is carried out between the two sets of electrical cabinets. For the case of including an odd number of electrical cabinets, the electrical cabinets included in the charge-discharge loop can be divided into two sets, with one set having one more electrical cabinet than the other set, and subsequent charging and discharging is carried out between the two sets of electrical cabinets.

In an example, every two electrical cabinets among the determined plurality of candidate electrical cabinets can form a charge-discharge loop. If the number of the determined plurality of candidate electrical cabinets is odd, every two electrical cabinets can be controlled to form a charge-discharge loop at different times. For example, if three candidate electrical cabinets 1, 2, and 3 are determined, candidate electrical cabinets 1 and 2 can first be controlled to form a charge-discharge loop, then candidate electrical cabinets 2 and 3 can be controlled to form a charge-discharge loop after a period of time, and then candidate electrical cabinets 2 and 3 can be controlled to form a charge-discharge loop again after a period of time. Such a cycle ensures that two of the candidate cabinets 1, 2, and 3 are being heated simultaneously at any given time.

A charge-discharge loop construction strategy can be pre-configured in the system controller, and based on this construction strategy, the system controller determines whether to form one charge-discharge loop or multiple charge-discharge loops with the plurality of candidate electrical cabinets.

The system controller can flexibly determine the electrical cabinets to be included in the charge-discharge loop to be constructed, and then control each charge-discharge loop to alternately form a charge loop and a discharge loop based on the determined electrical cabinets included in each charge-discharge loop, to implement simultaneous heating of the batteries in the electrical cabinets included in the each charge-discharge loop, improving the heating efficiency.

After determining the number of charge-discharge loops to be constructed and the electrical cabinets to be included in each charge-discharge loop, the system controller generates heating instructions corresponding to each charge-discharge loop and sends the heating instructions corresponding to each charge-discharge loop to the respective electrical cabinets in the charge-discharge loop. Since the process of the system controller generating the heating instruction and controlling the charge-discharge loop to carry out charging and discharging based on the heating instruction is the same for each charge-discharge loop, an embodiment of this application is described in detail in terms of a first charge-discharge loop. The first charge-discharge loop is any charge-discharge loop in the each charge-discharge loop.

For the first charge-discharge loop, the system controller first generates a heating instruction corresponding to the first charge-discharge loop based on the electrical cabinets included in the first charge-discharge loop. The heating instruction is used to indicate that electrical cabinets included in the first charge-discharge loop form the first charge-discharge loop and carry out charging and discharging. The heating instruction may include identification information of electrical cabinets for forming the first charge-discharge loop, stage indication information for each stage of charging and discharging, or the like.

The system controller sends the heating instruction to the voltage converters of the electrical cabinets in the first charge-discharge loop. Based on this heating instruction, the system controller controls the formation of a charge loop and a discharge loop that are alternately switched in the first charge-discharge loop.

The system controller sends the heating instruction to voltage converters of the electrical cabinets in the first charge-discharge loop, so that the voltage converters can control on/off of their own power devices based on the heating instruction and then form a charge loop and a discharge loop that are alternately switched in the first charge-discharge loop, to implement simultaneous heating of the batteries of the electrical cabinets included in the first charge-discharge loop. In this way, the heating efficiency is improved, temperatures of under-temperature batteries are increased, and the charge-discharge performance of the batteries is improved.

In some embodiments, the system controller can send the heating instruction to the voltage converter of each electrical cabinet in the first charge-discharge loop, so that the voltage converters of the electrical cabinets directly obtain the heating instruction, construct the first charge-discharge loop based on the heating instruction, and control their respective battery to charge and discharge based on the heating instruction.

In some other embodiments, the system controller may alternatively only send the heating instruction to the voltage converter of the target electrical cabinet in the first charge-discharge loop. Since the electrical cabinets in the energy storage system are collinearly connected, the heating instruction can be forwarded to voltage converters of other electrical cabinets in the first charge-discharge loop through the voltage converter of the target electrical cabinet. This provides another implementation for sending the heating instruction and saves data traffic of the system controller.

When determining the electrical cabinets to be included in the first charge-discharge loop, the system controller also determines a division method for the electrical cabinets to be included in the first charge-discharge loop, which divides the included electrical cabinets into two sets, referred to as the first electrical cabinet subset and the second electrical cabinet subset in the embodiments of this application, each of the two electrical cabinet subsets including at least one electrical cabinet. The system controller also determines a relationship between the battery power of each electrical cabinet in the first electrical cabinet subset and the battery power of the electrical cabinets in the second electrical cabinet subset. The battery power corresponding to each electrical cabinet can be a sum of powers of batteries in each electrical cabinet.

If the battery power corresponding to the first electrical cabinet subset is not equal to the battery power corresponding to the second electrical cabinet subset, in this case the electrical cabinet subset with the larger battery power can directly charge the electrical cabinet subset with the smaller battery power. If the battery power corresponding to the first electrical cabinet subset is equal to the battery power corresponding to the second electrical cabinet subset, the first electrical cabinet subset and the second electrical cabinet subset cannot directly charge each other. Therefore, the batteries of the electrical cabinets in one electrical cabinet subset need to first charge the energy storage elements of the voltage converter in their respective electrical cabinets before the batteries and the energy storage elements of the voltage converters in the electrical cabinet subset can be used together to charge the batteries in the other electrical cabinet subset.

When determining the electrical cabinets to be included in each charge-discharge loop, the system controller can determine the electrical cabinets to be included in the charge-discharge loop based on the powers of batteries in the candidate electrical cabinets, trying to make the battery powers corresponding to the first electrical cabinet subset and second electrical cabinet subset divided in the charge-discharge loop unequal. This can eliminate the need for the batteries to first charge the energy storage elements in the voltage converters, simplifying the subsequent charging and discharging process of the charge-discharge circuit and improving efficiency.

In some embodiments, if the battery power corresponding to the first electrical cabinet subset is greater than the battery power corresponding to the second electrical cabinet subset, the heating instruction sent by the system controller to the electrical cabinets in the first charge-discharge loop can include stage indication information for two stages. One stage indication information is used to indicate that the batteries in the first electrical cabinet subset charge the batteries in the second electrical cabinet subset, and the other stage indication information is used to indicate that the batteries in the second electrical cabinet subset charge the batteries in the first electrical cabinet subset.

Specifically, after the voltage converters of the electrical cabinets in the first charge-discharge loop have received the heating instruction, in the first stage, the voltage converters of the electrical cabinets in the first electrical cabinet subset perform a same first on/off operation of the power devices based on the heating instruction, while the voltage converters of the electrical cabinets in the second electrical cabinet subset perform a same second on/off operation of the power devices based on the heating instruction, so that in the first stage, the formation of a loop is controlled in which the batteries of the electrical cabinets in the first electrical cabinet subset charge the batteries of the electrical cabinets in the second electrical cabinet subset. In the second stage, the voltage converters of the electrical cabinets in the second electrical cabinet subset perform the same first on/off operation of the power devices based on the heating instruction, while the voltage converters of the electrical cabinets in the first electrical cabinet subset perform the same second on/off operation of the power devices based on the heating instruction, so that in the second stage, the formation of a loop is controlled in which the batteries of the electrical cabinets in the second electrical cabinet subset charge the batteries of the electrical cabinets in the first electrical cabinet subset. In other words, a loop in which the batteries of the electrical cabinets in the first electrical cabinet subset discharge to the batteries of the electrical cabinets in the second electrical cabinet subset is formed in the second stage.

The first stage and second stage are carried out cyclically, forming a charge loop and a discharge loop that are alternately switched in the first charge-discharge loop. With on/off of the power devices in the voltage converters being controlled, the batteries in the first electrical cabinet subset and the batteries in the second electrical cabinet subset alternately charge each other, achieving the self-heating of the batteries in the electrical cabinets in the first charge-discharge loop and improving the battery heating efficiency.

In some other embodiments, if the battery power corresponding to the first electrical cabinet subset is equal to the battery power corresponding to the second electrical cabinet subset, the heating instruction sent by the system controller to the electrical cabinets in the first charge-discharge loop can include stage indication information for four stages. A first stage indication information is used to indicate that the batteries in the first electrical cabinet subset charge the energy storage elements of the voltage converter in their respective electrical cabinets. A second stage indication information is used to indicate that the batteries and foregoing energy storage elements in the first electrical cabinet subset together charge the batteries in the second electrical cabinet subset. A third stage indication information is used to indicate that the batteries in the second electrical cabinet subset charge energy storage elements of the voltage converter in their respective electrical cabinets to which the batteries belong. A fourth stage indication information is used to indicate that the batteries and energy storage elements in the second electrical cabinet subset together charge the batteries in the first electrical cabinet subset.

Specifically, after the voltage converters of the electrical cabinets in the first charge-discharge loop have received the heating instruction, in the first stage, the voltage converters of the electrical cabinets in the first electrical cabinet subset perform a same third on/off operation of the power devices based on the heating instruction, while the power devices of the voltage converters of the electrical cabinets in the second electrical cabinet subset are all turned off, so that in the first stage, the formation of a loop is controlled in which the batteries of the electrical cabinets in the first electrical cabinet subset respectively charge the energy storage elements of the voltage converter in their respective electrical cabinets. In the second stage, the voltage converters of the electrical cabinets in the first electrical cabinet subset perform a same fourth on/off operation of the power devices, while the power devices of the voltage converters of the electrical cabinets in the second electrical cabinet subset perform a same fifth on/off operation of the power devices, so that in the second stage, the formation of a loop is controlled in which the batteries and the energy storage elements of the voltage converters of the electrical cabinets in the first electrical cabinet subset charge the batteries of the electrical cabinets in the second electrical cabinet subset.

Similarly, in the third stage, the voltage converters of the electrical cabinets in the second electrical cabinet subset perform the same fifth on/off operation of the power devices based on the heating instruction, while the power devices of the voltage converters of the electrical cabinets in the first electrical cabinet subset are all turned off, so that in the third stage, the formation of a loop is controlled in which the batteries of the electrical cabinets in the second electrical cabinet subset charge the energy storage elements of the voltage converters in their respective electrical cabinets. In the fourth stage, the voltage converters of the electrical cabinets in the second electrical cabinet subset perform a same sixth on/off operation of the power devices, while the power devices of the voltage converters of the electrical cabinets in the first electrical cabinet subset perform a same seventh on/off operation of the power devices, so that in the fourth stage, the formation of a loop is controlled in which the batteries and the energy storage elements of the voltage converters of the electrical cabinets in the second electrical cabinet subset charge the batteries of the electrical cabinets in the first electrical cabinet subset.

The first stage to the fourth stage are carried out cyclically, forming a charge loop and a discharge loop that are alternately switched in the first charge-discharge loop. With on/off of the power devices in the voltage converters being controlled, the self-heating of the batteries of the electrical cabinets in the first charge-discharge loop is implemented, improving the battery heating efficiency.

In some embodiments of this application, in addition, a duration for the first electrical cabinet subset to charge the second electrical cabinet subset is controlled based on the heating instruction to be shorter than a duration for the second electrical cabinet subset to charge the first electrical cabinet subset when the number of batteries included in the first electrical cabinet subset is greater than the number of batteries included in the second electrical cabinet subset, thereby avoiding the problem of overcharging of the batteries in the second electrical cabinet subset during charging and discharging.

For each of the other charge-discharge loops determined by the system controller, each of the other charge-discharge loops is controlled to carry out charging and discharging in the same manner of controlling the first charge-discharge loop. Thus, simultaneous heating of batteries of a greater number of electrical cabinets is achieved, significantly improving the heating efficiency.

During the process of controlling each charge-discharge loop to carry out charging and discharging in the foregoing manner, it is also determined whether a preset stop heating condition is met based on electrical parameters of the battery in each electrical cabinet included in the charge-discharge loop. When it is determined that the preset stop heating condition is met, a stop heating instruction is sent to the voltage converters of the electrical cabinets in the charge-discharge loop.

The preset stop heating condition includes that there is a battery with a temperature that meets a preset abnormal condition in the charge-discharge loop, or that the temperature of the battery of the target electrical cabinet that needs to be heated in the charge-discharge loop reaches a preset required temperature. The preset abnormal condition may include that the temperature of the battery is higher than the preset temperature threshold, or that the battery temperature rise rate is higher than the preset rate, or the like. The preset required temperature may be 10°C, 15°C, 20°C, or the like.

Specifically, the battery management system in each electrical cabinet included in each charge-discharge loop monitors the temperature of the battery in its respective electrical cabinet in real time and determines whether the temperature of the battery meets the preset abnormal condition. When detecting that the temperature of the battery meets the preset abnormal condition, the battery management system sends temperature anomaly information to the system controller. When receiving the temperature anomaly information, the system controller determines that the preset stop heating condition is met.

If the battery management system determines that the temperature of the battery does not meet the preset abnormal condition, the battery management system also determines whether the temperature of the battery is greater than or equal to the preset required temperature. If yes, the battery management system determines that the preset stop heating condition is met, and sends temperature compliance information to the system controller. When receiving the temperature compliance information, the system controller determines that the preset stop heating condition is met.

In some implementations, the battery management system can alternatively upload the detected battery temperature directly to the system controller, which determines whether the temperature of the battery meets the preset abnormal condition and whether the temperature of the battery is greater than or equal to the preset required temperature. When determining that the temperature of the battery meets the preset abnormal condition or that the temperature of the battery is greater than or equal to the preset required temperature, the system controller determines that the preset stop heating condition is met.

When determining that the battery of an electrical cabinet meets the preset stop heating condition, the system controller sends a stop heating instruction to the voltage converters of the electrical cabinets in the charge-discharge loop to which the electrical cabinet belongs. After receiving the stop heating instruction, each voltage converter restores the on/off status of its power devices to an initial state, no longer forms a charge-discharge loop, and stops charging and discharging. The initial state of the power devices of the voltage converter may be the on/off status of the power devices before the charge-discharge loop is formed.

In some other implementations, the battery management system can alternatively first determine whether the temperature of the battery meets the preset stop heating condition, and when it is determined that the preset stop heating condition is met, the determination result is sent to the voltage converter in the electrical cabinet to which the battery management system belongs. After receiving the determination result, the voltage converter determines that the preset stop heating instruction is currently met and controls the on/off status of its power devices to restore to the initial state. In addition, the voltage converter also sends the stop heating instruction to the voltage converters of other electrical cabinets in the charge-discharge loop where the voltage converter is located, and sends indication information indicating to stop heating to the system controller. After receiving the stop heating instruction, the voltage converters of other electrical cabinets also control the on/off status of their power devices to restore to their initial states.

Since a communication distance between the battery management system and the voltage converter in a same electrical cabinet is closer, the battery management system directly transmits the battery temperature determination result to the voltage converter in the same electrical cabinet, enabling quicker stop of charging and discharging when the battery meets the preset stop heating condition, effectively reducing the safety hazards caused by abnormal battery temperature, and also effectively reducing the occurrence of battery overheating caused by continuous rise of temperature after the battery temperature reaches the preset required temperature.

During the process of charging and discharging based on the charge-discharge loop, the system controller can also detect in real time whether there is a fault in any electrical cabinet in the charge-discharge loop. If a fault is detected in an electrical cabinet, a stop heating instruction is sent to the voltage converters of the electrical cabinets in the charge-discharge loop to which the faulty electrical cabinet belongs. After receiving the stop heating instruction, each voltage converter controls the on/off status of its power devices to restore to their initial states.

During the process of charging and discharging in the charge-discharge loop formed between the electrical cabinets, based on the electrical parameters of the batteries in the electrical cabinets, it is determined in real time whether the preset stop heating condition is met, and the charge-discharge loop is controlled to stop charging and discharging promptly when it is determined that the preset stop heating condition is met. This can avoid safety issues caused by continuous charging and disc harging when the battery temperature is abnormal and can also prevent the battery temperature from continuing to rise after reaching the preset required temperature and leading to overheating.

In the embodiments of this application, when it is determined that there exists an electrical cabinet that meets the preset heating condition, the switch module between the electrical cabinets and the high-voltage bus is controlled to disconnect, so that subsequent discharge current of the batteries in the electrical cabinets can flow to batteries in other electrical cabinets, creating a structural condition for forming a charge-discharge loop between the electrical cabinets. A charge-discharge loop is formed among a plurality of electrical cabinets to allow for charging and discharging between the electrical cabinets, forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

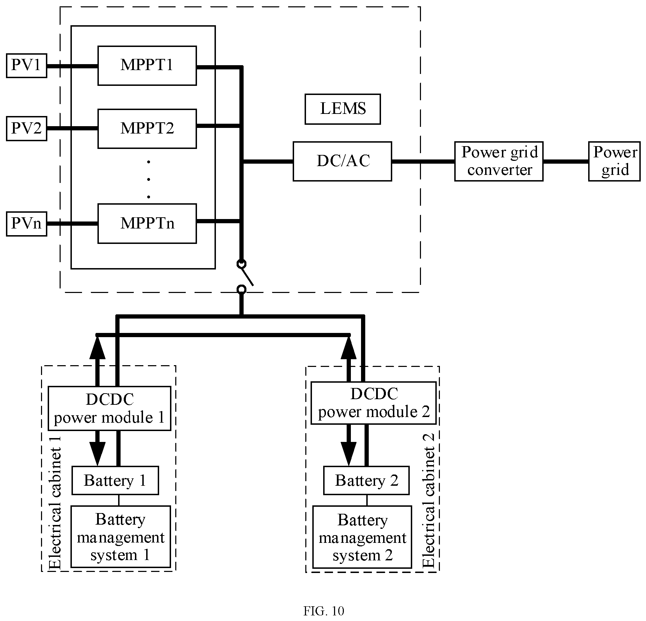

To facilitate understanding of the battery self-heating control method proposed in the embodiments of this application, a specific example is provided below for illustration. This example uses a photovoltaic energy storage system as an example. FIG. 10 shows a circuit structure diagram of the photovoltaic energy storage system. The photovoltaic energy storage system includes electrical cabinet 1 and electrical cabinet 2. Electrical cabinet 1 includes battery 1, battery management system 1, and DCDC power module 1. Electrical cabinet 2 includes battery 2, battery management system 2, and DCDC power module 2. The system controller of the photovoltaic energy storage system is a LEMS. he battery self-heating control method based on the photovoltaic energy storage system specifically includes the following steps:
A1. Battery management system 1 collects first electrical parameters of battery 1, such as temperature, SOC, voltage, and current, and transmits the first electrical parameters to the LEMS. Battery management system 2 collects second electrical parameters of battery 2 and transmits the second electrical parameters to the LEMS;
A2. The LEMS determines whether the temperature of battery 1 or the temperature of battery 2 is lower than a preset low-temperature threshold T1 based on the first electrical parameters and the second electrical parameters, respectively; and if yes, performs step A3, or if no, returns to step A1;
A3. The LEMS determines whether the power level of battery 1 or the power level of battery 2 is lower than the preset power threshold based on the first electrical parameters and the second electrical parameters, respectively; and if no, performs step A4, or if yes, returns to step A1;
A4. The LEMS detects whether there are any faults in electrical cabinet 1 and electrical cabinet 2; and if no, performs step A5, or if yes, returns to step A1; and
A5. The LEMS controls the switch module to disconnect, and the LEMS sends a heating instruction to DCDC power module 1 and DCDC power module 2.

After the switch module is disconnected, an electrical cabinet heating mode by charging and discharging between electrical cabinets will be activated. DCDC power module 1 and DCDC power module 2 can use either a topology with or without flying capacitors, and a single-bridge or multi-bridge arm structure can be used for the bridge arm. The following examples illustrate DCDC power module 1 and DCDC power module 2 using a three-bridge arm structure with flying capacitors and a three-bridge arm structure without flying capacitors, respectively.

### Example 1

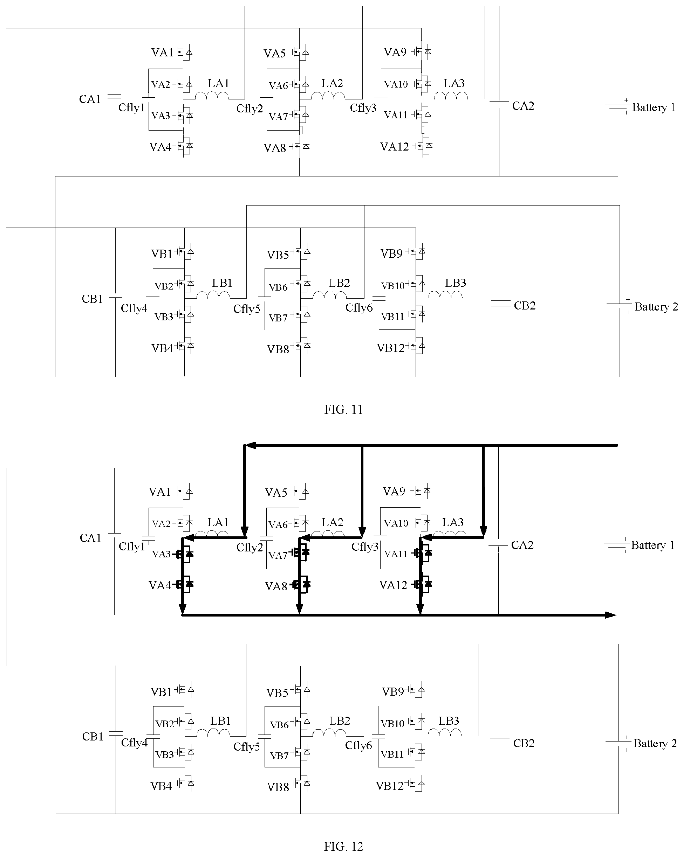

As shown in FIG. 11, DCDC power module 1 and DCDC power module 2 use a three-bridge arm structure with flying capacitors. A first bridge arm of DCDC power module 1 connects four switching transistors VA1, VA2, VA3, and VA4 in sequence, with flying capacitor C_{fly1} connected in parallel with the series-connected VA2 and VA3. A second bridge arm of DCDC power module 1 is connected to four switching transistors VA5, VA6, VA7, and VA8 in sequence, with flying capacitor C_{fly2} connected in parallel with the series-connected VA6 and VA7. A third bridge arm of DCDC power module 1 is connected to four switching transistors VA9, VA10, VA11, and VA12 in sequence, with flying capacitor C_{fly3} connected in parallel with the series-connected VA10 and VA11. A connection point between switching transistors VA2 and VA3 is connected to one end of inductor LA1, a connection point between switching transistors VA6 and VA7 is connected to one end of inductor LA2, and a connection point between switching transistors VA10 and VA11 is connected to one end of inductor LA3. The other ends of inductors LA1, LA2, and LA3 are all connected to the positive electrode of battery 1.

As shown in FIG. 11, a first bridge arm of DCDC power module 2 is connected to four switching transistors VB1, VB2, VB3, and VB4 in sequence, with flying capacitor C_{fly4} connected in parallel with the series-connected VB2 and VB3. A second bridge arm of DCDC power module 2 is connected to four switching transistors VB5, VB6, VB7, and VB8 in sequence, with flying capacitor C_{fly5} connected in parallel with the series-connected VB6 and VB7. A third bridge arm of DCDC power module 2 is connected to four switching transistors VB9, VB10, VB11, and VB12 in sequence, with flying capacitor C_{fly6} connected in parallel with the series-connected VB10 and VB11. A connection point between switching transistors VB2 and VB3 is connected to one end of inductor LB1, a connection point between switching transistors VB6 and VB7 is connected to one end of inductor LB2, and a connection point between switching transistors VB10 and VB11 is connected to one end of inductor LB3. The other ends of inductors LB1, LB2, and LB3 are all connected to the positive electrode of battery 2.

One end of the first bridge arm close to VA1, one end of the second bridge arm close to VA5, and one end of the third bridge arm close to VA9 of DCDC power module 1, and one end of the first bridge arm close to VB1, one end of the second bridge arm close to VB5, and one end of the third bridge arm close to VB9 of DCDC power module 2 are collinearly connected.

One end of the first bridge arm close to VA4, one end of the second bridge arm close to VA8, and one end of the third bridge arm close to VA12 of DCDC power module 1, one end of the first bridge arm close to VB4, one end of the second bridge arm close to VB8, and one end of the third bridge arm close to VB12 of DCDC power module 2, and negative electrodes of batteries 1 and 2 are collinearly connected.

As shown in FIG. 11, capacitor CA2 is also connected in parallel across two ends of the battery 1, capacitor CB2 is also connected in parallel across two ends of the battery 2, the three bridge arms of the DCDC power module 1 are also connected in parallel with capacitor CA1, and the three bridge arms of the DCDC power module 2 are also connected in parallel with capacitor CB1.

Based on the circuit structure shown in FIG. 11, the following steps are performed starting from step B1 after step A5.

B1. In DCDC power module 1, switching transistors VA3, VA4, VA7, VA8, VA11, and VA12 are turned on, VA1, VA2, VA5, VA6, VA9, and VA10 are turned off; and all switching transistors in DCDC power module 2 are turned off.

In this case, battery 1 is discharged, and inductors LA1, LA2, LA3 in DCDC power module 1 are charged. The discharge loop of battery 1 is: positive electrode of battery 1 → LA1, VA3, VA4 / LA2, VA7, VA8/LA3, VA11, and VA12 → negative electrode of battery 1, and the current flow direction is as shown in FIG. 12.

After battery 1 charges inductors LA1, LA2, and LA3 for a period of time, an operation at step B2 is performed. A duration for battery 1 charging inductors LA1, LA2, and LA3 can be carried in the heating instruction sent by the system controller. DCDC power module 1 and DCDC power module 2 control durations of individual stages based on the heating instruction.

B2. In DCDC power module 1, switching transistors VA1, VA2, VA5, VA6, VA9, and VA10 are turned on, VA3, VA4, VA7, VA8, VA11, and VA12 are turned off; and in DCDC power module 2, VB1, VB2, VB5, VB6, VB9, and VB10 are turned on, and VB3, VB4, VB7, VB8, VB11, and VB12 are turned off.

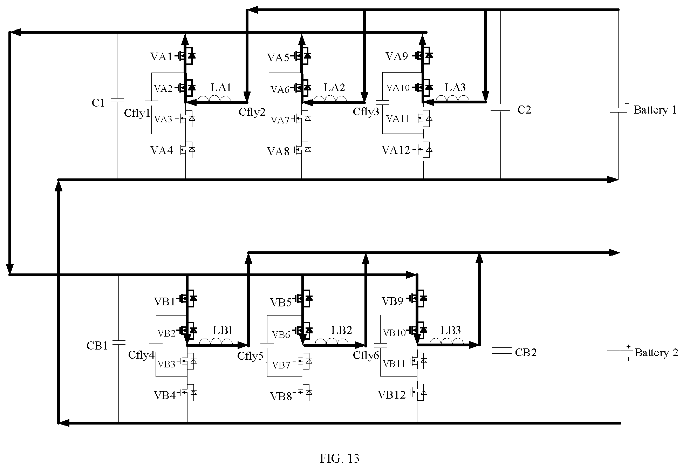

In this case, battery 1 is discharged, and battery 2 is charged, with a current loop as follows: positive electrode of battery 1 → LA1, VA1, VA2/LA2, VA5, VA6/LA3, VA9, and VA10 → VB1, VB2, LB1/VB5, VB6, LB2/VB9, VB10, and LB3 → positive electrode of battery 2 → negative electrode of battery 2 → negative electrode of battery 1, and the current flow direction is as shown in FIG. 13.

After step B2 is performed for a period of time, step B3 is executed. The period of time can be carried in the heating instruction. Repeating steps B1 and B2 can implement the process of battery 1 continuously charging battery 2.

B3. In DCDC power module 2, switching transistors VB3, VB4, VB7, VB8, VB11, and VB12 are turned on, VB1, VB2, VB5, VB6, VB9, and VB10 are turned off; and all switching transistors in DCDC power module 1 are turned off.

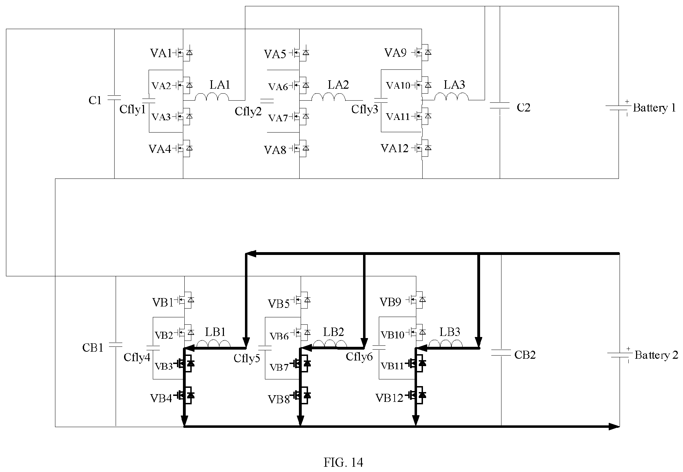

In this case, battery 2 is discharged, and inductors LB1, LB2, LB3 in DCDC power module 2 are charged. The discharge loop of battery 2 is: positive electrode of battery 2 → LB1, VB3, VB4 / LB2, VB7, VB8/LB3, VB11, and VB 12 → negative electrode of battery 2, and the current flow direction is as shown in FIG. 14.

After battery 2 charges inductors LB1, LB2, and LB3 for a period of time, an operation at step B4 is performed. A duration for battery 2 charging inductors LB1, LB2, and LB3 can be carried in the heating instruction.

B4. In DCDC power module 1, switching transistors VA1, VA2, VA5, VA6, VA9, and VA10 are turned on, VA3, VA4, VA7, VA8, VA11, and VA12 are turned off; and in DCDC power module 2, switching transistors VB1, VB2, VB5, VB6, VB9, and VB10 are turned on, and VB3, VB4, VB7, VB8, VB11, and VB12 are turned off.

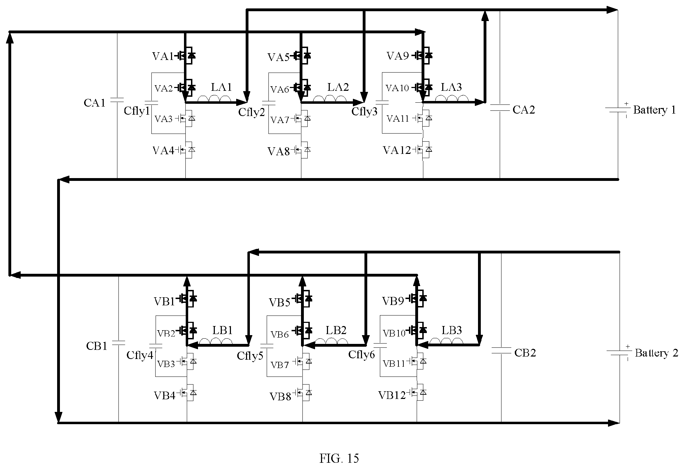

In this case, battery 2 is discharged, and battery 1 is charged, with a current loop as follows: positive electrode of battery 2 → LB1, VB2, VB1/LB2, VB6, VB5/LB3, VB10, and VB9 → VA1, VA2, LA1/VA5, VA6, LA2/VA9, VA10, and LA3 → positive electrode of battery 1 → negative electrode of battery 1 → negative electrode of battery 2, and the current flow direction is as shown in FIG. 15.

A duration for battery 2 charging battery 1 can also be carried in the heating instruction. Repeating steps B3 and B4 can implement the process of battery 2 continuously charging battery 1. Repeating steps B1 to B4 can implement charging and discharging between electrical cabinet 1 and electrical cabinet 2, achieving the function of simultaneously heating battery 1 and battery 2.

In the charge-discharge loops shown in FIG. 11 to FIG. 15, the structures of DCDC power modules 1 and 2 can also adopt a single-bridge arm or multi-bridge arm structure with flying capacitors, as shown in FIG. 7.

### Example 2

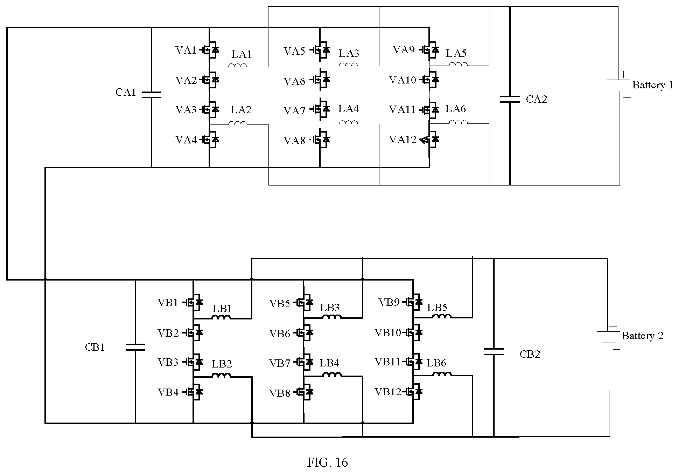

As shown in FIG. 16, DCDC power module 1 and DCDC power module 2 use a three-bridge arm structure without flying capacitors. A first bridge arm of DCDC power module 1 is connected to four switching transistors VA1, VA2, VA3, and VA4 in sequence. A second bridge arm of DCDC power module 1 is connected to four switching transistors VA5, VA6, VA7, and VA8 in sequence. A third bridge arm of DCDC power module 1 is connected to four switching transistors VA9, VA10, VA11, and VA12 in sequence. A connection point between switching transistors VA1 and VA2 is connected to one end of inductor LA1, a connection point between switching transistors VA3 and VA4 is connected to one end of inductor LA2, a connection point between switching transistors VA5 and VA6 is connected to one end of inductor LA3, a connection point between switching transistors VA7 and VA8 is connected to one end of inductor LA4, a connection point between switching transistors VA9 and VA10 is connected to one end of inductor LA5, and a connection point between switching transistors VA11 and VA12 is connected to one end of inductor LA6. The other ends of inductors LA1, LA3, and LA5 are all connected to the positive electrode of battery 1, and the other ends of inductors LA2, LA4, and LA6 are all connected to the negative electrode of battery 1.

As shown in FIG. 16, a first bridge arm of DCDC power module 2 is connected to four switching transistors VB1, VB2, VB3, and VB4 in sequence. A second bridge arm of DCDC power module 2 is connected to four switching transistors VB5, VB6, VB7, and VB8 in sequence. A third bridge arm of DCDC power module 2 is connected to four switching transistors VB9, VB10, VB11, and VB12 in sequence. A connection point between switching transistors VB1 and VB2 is connected to one end of inductor LB1, a connection point between switching transistors VB3 and VB4 is connected to one end of inductor LB2, a connection point between switching transistors VB5 and VB6 is connected to one end of inductor LB3, a connection point between switching transistors VB7 and VB8 is connected to one end of inductor LB4, a connection point between switching transistors VB9 and VB10 is connected to one end of inductor LB5, and a connection point between switching transistors VB11 and VB12 is connected to one end of inductor LB6. The other ends of inductors LB1, LB3, and LB5 are all connected to the positive electrode of battery 2, and the other ends of inductors LB2, LB4, and LB6 are all connected to the negative electrode of battery 2.

One end of the first bridge arm close to VA1, one end of the second bridge arm close to VA5, and one end of the third bridge arm close to VA9 of DCDC power module 1, and one end of the first bridge arm close to VB1, one end of the second bridge arm close to VB5, and one end of the third bridge arm close to VB9 of DCDC power module 2 are collinearly connected.

One end of the first bridge arm close to VA4, one end of the second bridge arm close to VA8, and one end of the third bridge arm close to VA12 of DCDC power module 1, and one end of the first bridge arm close to VB4, one end of the second bridge arm close to VB8, and one end of the third bridge arm close to VB12 of DCDC power module 2 are collinearly connected.

As shown in FIG. 16, capacitor CA2 is also connected in parallel across two ends of the battery 1, capacitor CB2 is also connected in parallel across two ends of the battery 2, the three bridge arms of the DCDC power module 1 are also connected in parallel with capacitor CA1, and the three bridge arms of the DCDC power module 2 are also connected in parallel with capacitor CB1.

Based on the circuit structure shown in FIG. 16, the following steps are performed starting from step C1 after step A5.

C1. In DCDC power module 1, switching transistors VA2, VA3, VA6, VA7, VA10, and VA11 are turned on, VA1, VA4, VA5, VA8, VA9, and VA12 are turned off; and all switching transistors in DCDC power module 2 are turned off.

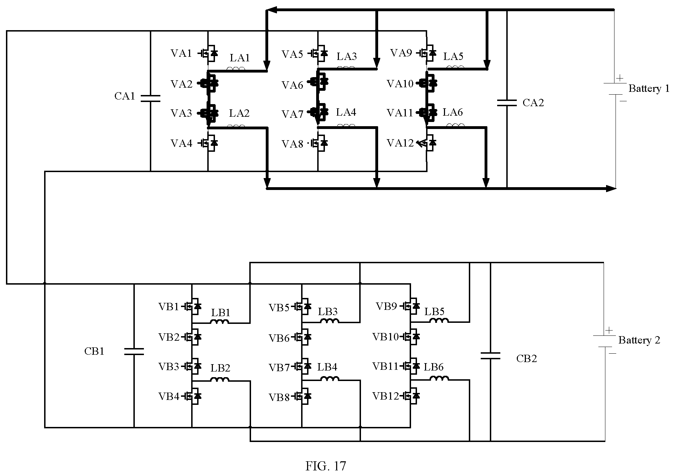

In this case, battery 1 is discharged, and inductors LA1, LA2, LA3, LA4, LA5, and LA6 in DCDC power module are charged. The discharge loop of battery 1 is: positive electrode of battery 1 → LA1, VA2, VA3, LA2/LA3, VA6, VA7, LA4/LA5, VA10, VA11, and LA6 → negative electrode of battery 1, and the current flow direction is as shown in FIG. 17.

After battery 1 charges inductors LA1, LA2, LA3, LA4, LA5, and LA6 for a period of time, an operation at step C2 is performed. A duration for battery 1 charging the inductors can be carried in the heating instruction.

C2. In DCDC power module 1, switching transistors VA1, VA4, VA5, VA8, VA9, and VA12 are turned on, VA2, VA3, VA6, VA7, VA10, and VA11 are turned off; and in DCDC power module 2, switching transistors VB1, VB4, VB5, VB8, VB9, and VB12 are turned on, and VB2, VB3, VB6, VB7, VB10, and VB11 are turned off.

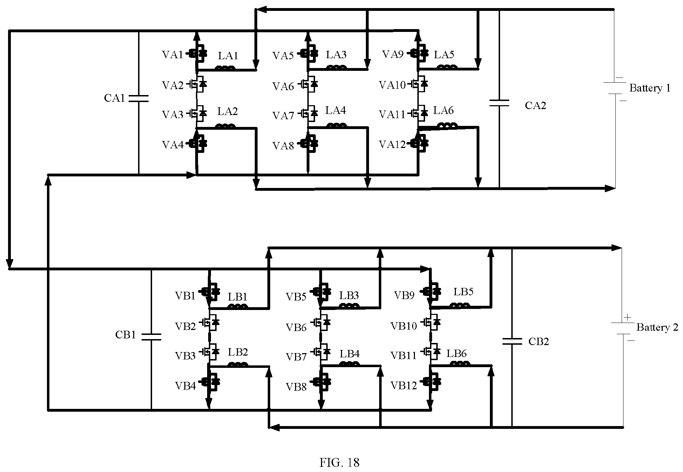

In this case, battery 1 is discharged, and battery 2 is charged, with a current loop as follows: positive electrode of battery 1 → LA1, VA1/LA3, VA5/LA5, and VA9 → VB1, LB1/VB5, LB3/VB9, and LB5 → positive electrode of battery 2 → negative electrode of battery 2 → LB6, VB12/LB4, VB8/LB2, and VB4 → VA4, LA2/VA8, LA4/VA12, and LA6 → negative electrode of battery 1, and the current flow direction is as shown in FIG. 18.

After step C2 is performed for a period of time, step C3 is executed. A duration for battery 1 charging battery 2 can be carried in the heating instruction. Repeating steps C1 and C2 can implement the process of battery 1 continuously charging battery 2.

C3. In DCDC power module 2, VB2, VB3, VB6, VB7, VB10, and VB11 are turned on, VB1, VB4, VB5, VB8, VB9, and VB12 are turned off; and all switching transistors in DCDC power module 1 are turned off.

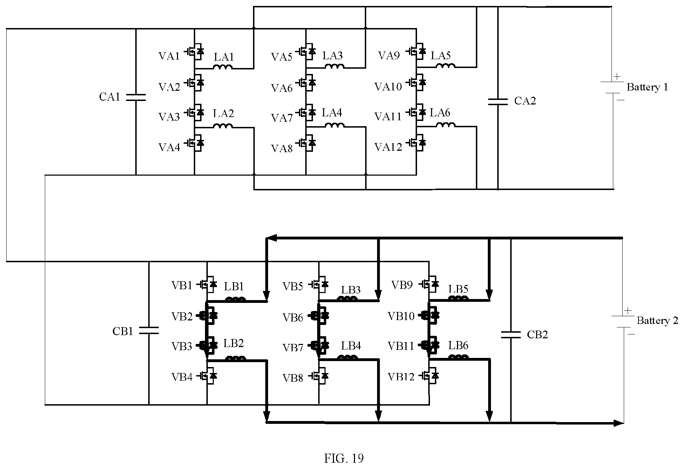

In this case, battery 2 is discharged, and inductors LB1, LB2, LB3, LB4, LB5, and LB6 in DCDC power module 2 are charged. The discharge loop of battery 2 is: positive electrode of battery 2 → LB1, VB2, VB3, LB2/LB3, VB6, VB7, LB4/LB5, VB10, VB11, and LB6 → negative electrode of battery 2, and the current flow direction is as shown in FIG. 19.

After battery 2 charges the inductors for a period of time, an operation at step C4 is performed. A duration for battery 2 charging the inductors can also be carried in the heating instruction.

C4. In DCDC power module 1, VA1, VA4, VA5, VA8, VA9, and VA12 are turned on, VA2, VA3, VA6, VA7, VA10, and VA11 are turned off; and in DCDC power module 2, VB1, VB4, VB5, VB8, VB9, and VB12 are turned on, and VB2, VB3, VB6, VB7, VB10, and VB11 are turned off.

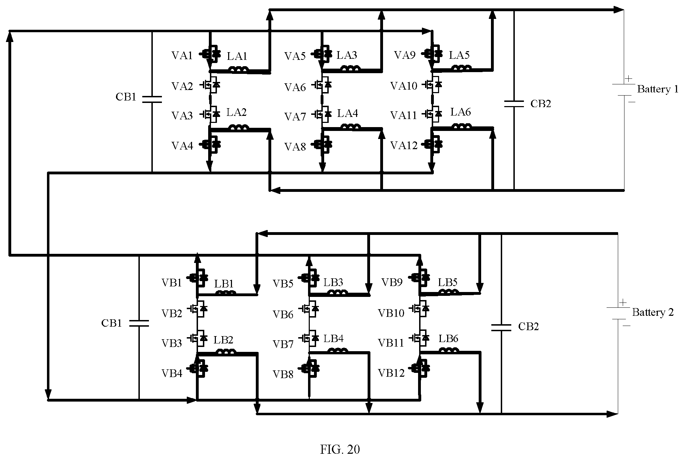

In this case, battery 2 is discharged, and battery 1 is charged, with a current loop as follows: positive electrode of battery 2 → LB1, VB1/LB3, VB5/LB5, and VB9 → VA1, LA1/VA5, LA3/VA9, and LA5 → positive electrode of battery 1 → negative electrode of battery 1 → LA2, VA4/LA4, VA8/LA6, and VA12 → VB4, LB2/VB8, LB4/VB12, and LB6 → negative electrode of battery 2, and the current flow direction is as shown in FIG. 20.

A duration for battery 2 charging battery 1 can also be carried in the heating instruction. Repeating steps C3 and C4 can implement the process of battery 2 continuously charging battery 1. Repeating steps C1 to C4 can implement charging and discharging between electrical cabinet 1 and electrical cabinet 2, achieving the function of simultaneously heating battery 1 and battery 2.

In the charge-discharge loops shown in FIG. 16 to FIG. 20, the structures of DCDC power modules 1 and 2 can also adopt a single-bridge arm or multi-bridge arm structure without flying capacitors, as shown in FIG. 8.

During the process of charging and discharging between electrical cabinet 1 and electrical cabinet 2 shown in Example 1 or Example 2, the following steps are also executed in real time:
D1. Battery management system 1 determines whether the temperature of battery 1 is abnormal, and sends temperature anomaly information to the LEMS if there is an anomaly. Battery management system 2 determines whether the temperature of battery 2 is abnormal, and sends temperature anomaly information to the LEMS if there is an anomaly; and
D2. When receiving the temperature anomaly information sent by battery management system 1 or 2, the LEMS sends a stop heating instruction to DCDC power modules 1 and 2 to stop heating.

During the process of charging and discharging between electrical cabinet 1 and electrical cabinet 2 shown in Example 1 or Example 2, the following steps are also executed in real time:
E1. Battery management system 1 determines whether the temperature of battery 1 has reached a preset required temperature, and if yes, sends temperature compliance information to the LEMS. Battery management system 2 determines whether the temperature of battery 2 has reached the preset required temperature, and if yes, sends temperature compliance information to the LEMS; and
E2. After determining that both batteries 1 and 2 have reached the preset required temperature, the LEMS sends a stop heating instruction to DCDC power modules 1 and 2 to stop heating.

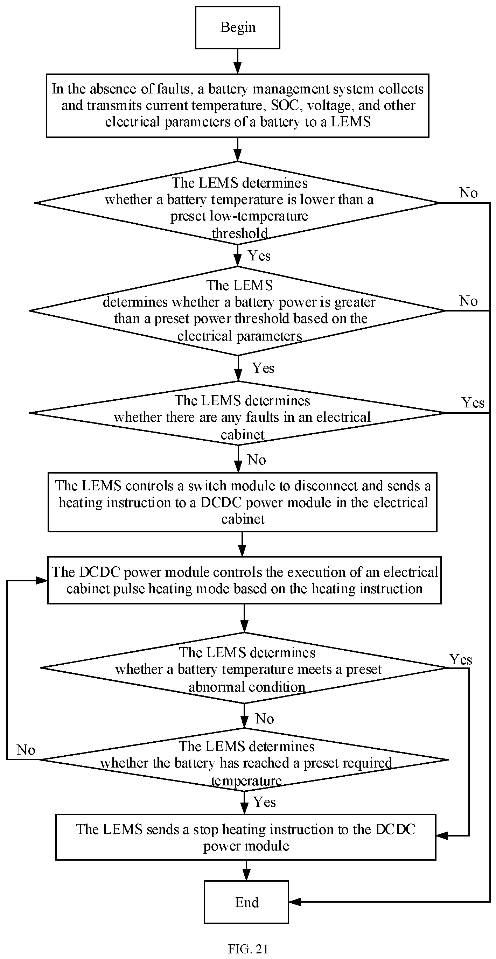

To further understand the battery self-heating control method in the photovoltaic energy storage system, the control process is illustrated in the form of a flowchart. As shown in FIG. 21, in the absence of faults, a battery management system collects and transmits current temperature, SOC, voltage, and other electrical parameters of a battery to a LEMS. The LEMS determines whether a battery temperature is lower than a preset low-temperature threshold. If no, the process ends. If yes, the LEMS determines whether a battery power is greater than a preset power threshold based on the electrical parameters. If no, the process ends. If yes, the LEMS determines whether there are any faults in an electrical cabinet. If faults exist, the process ends. If no faults exist, the LEMS controls a switch module to disconnect and sends a heating instruction to a DCDC power module in the electrical cabinet. The DCDC power module controls the execution of an electrical cabinet pulse heating mode based on the heating instruction. The LEMS determines whether a battery temperature meets a preset abnormal condition. If yes, the LEMS sends a stop heating instruction to the DCDC power module to end the control process. If no, the LEMS determines whether the battery has reached a preset required temperature. If yes, the LEMS sends a stop heating instruction to the DCDC power module to end the control process. If the preset required temperature is not reached, the process returns to the step where the DCDC power module controls the execution of the electrical cabinet pulse heating mode based on the heating instruction, to continue heating.

In the photovoltaic energy storage system, when it is determined that there exists an electrical cabinet that meets the preset heating condition, the switch module is controlled to disconnect, so that subsequent discharge current of the batterie s in the electrical cabinets can flow to batteries in other electrical cabinets, creating a structural condition for forming a charge-discharge loop between the electrical cabinets. A charge-discharge loop is formed among the electrical cabinets to enable charging and discharging between the electrical cabinets, thereby forming an alternating current flowing through batteries in the plurality of electrical cabinets. This causes the internal resistance of the batteries in the plurality of electrical cabinets to generate heat simultaneously, achieving simultaneous heating of the batteries in the plurality of electrical cabinets and improving the heating efficiency.

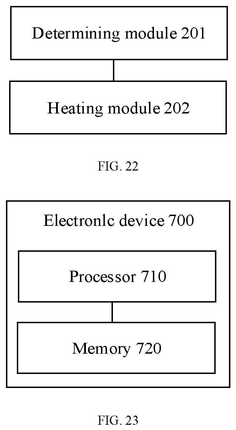

An embodiment of this application further provides a battery self-heating control apparatus applied to the energy storage system provided in the foregoing embodiments. The apparatus is configured to execute the battery self-heating control method provided in the foregoing embodiments. As shown in FIG. 22, the apparatus includes:
a determining module 201, configured to determine that there exists at least one target electrical cabinet that meets a preset heating condition; and
a heating module 202, configured to control a plurality of electrical cabinets including a target electrical cabinet to form a charge-discharge loop, and charge and discharge a battery in the target electrical cabinet based on the charge-discharge loop.

The heating module 202 is configured to control the switch module to disconnect; determine a plurality of candidate electrical cabinets for forming a charge-discharge loop, the plurality of candidate electrical cabinets including the target electrical cabinet; and control on/off of power devices in voltage converters of the plurality of candidate electrical cabinets to form a charge loop and a discharge loop that are alternately switched.

The heating module 202 is configured to determine, based on electrical parameters of batteries in remaining electrical cabinets except the target electrical cabinet, electrical cabinets that meet a preset charge-discharge condition from the remaining electrical cabinets; select at least one electrical cabinet from the electrical cabinets that meet the preset charg e-discharge condition; and determine the target electrical cabinet and the selected at least one electrical cabinet as the plurality of candidate electrical cabinets for forming a charge-discharge loop.

The heating module 202 is configured to determine, based on the plurality of candidate electrical cabinets, candidate electrical cabinets to be included in each of at least one charge-discharge loop to be formed, each of the charge-discharge loops including at least one target electrical cabinet that meets the preset heating condition; and control on/off of the power devices in the voltage converters of the candidate electrical cabinets included in each charge-discharge loop separately, to form a charge loop and a discharge loop that are alternately switched in each charge-discharge loop.

The heating module 202 is configured to determine to form one charge-discharge loop and divide the plurality of candidate electrical cabinets into a first electrical cabinet set and a second electrical cabinet set; and determine the first electrical cabinet set and the second electrical cabinet set as two sets of electrical cabinets in the one charge-discharge loop.

The heating module 202 is configured to determine to form multiple charge-discharge loops, the number of the multiple charge-discharge loops being less than or equal to the number of the target electrical cabinets; divide the plurality of candidate electrical cabinets into multiple sets of electrical cabinets, each including at least two candidate electrical cabinets; and determine the multiple sets of electrical cabinets as the candidate electrical cabinets to be included in each of the multiple charge-discharge loops, respectively.

The heating module 202 is configured to send a heating instruction to voltage converters of electrical cabinets in a first charge-discharge loop, the first charge-discharge loop being any charge-discharge loop in the each charge-discharge loop; and control, based on this heating instruction, the formation of a charge loop and a discharge loop that are alternately switched in the first charge-discharge loop.

The heating module 202 is configured to send the heating instruction to the voltage converter of each electrical cabinet in the first charge-discharge loop; or send the heating instruction to the voltage converter of the target electrical cabinet in the first charge-discharge loop; and forward the heating instruction to the voltage converters of the other electrical cabinets in the first charge-discharge loop through the voltage converter of the target electrical cabinet.

In this embodiment of this application, the first charge-discharge loop includes a first electrical cabinet subset and a second electrical cabinet subset, the battery power corresponding to the first electrical cabinet subset being greater than the battery power corresponding to the second electrical cabinet subset; and the heating module 202 is configured to control in a first stage, based on the heating instruction, the formation of a loop in which batteries of electrical cabinets in the first electrical cabinet subset charge batteries of electrical cabinets in the second electrical cabinet subset, and control in a second stage the formation of a loop in which the batteries of the electrical cabinets in the second electrical cabinet subset charge the batteries of the electrical cabinets in the first electrical cabinet subset.

In some other embodiments, the first charge-discharge loop includes a first electrical cabinet subset and a second electrical cabinet subset, the battery power corresponding to the first electrical cabinet subset being equal to the battery power corresponding to the second electrical cabinet subset; and the heating module 202 is configured to control the formation of a loop in which the batteries from the electrical cabinets in the first electrical cabinet subset charge the energy storage elements of the voltage converters in their respective electrical cabinets, respectively, in the first stage based on the heating instruction, control the formation of a loop in which the batteries and the energy storage elements of the voltage converters from the electrical cabinets in the first electrical cabinet subset charge the batteries from the electrical cabinets in the second electrical cabinet subset in the second stage, control the formation of a loop in which the batteries from the electrical cabinets in the second electrical cabinet subset charge the energy storage elements of the voltage converters in their respective electrical cabinets in the third stage, and control the formation of a loop in which the batteries and the energy storage elements of the voltage converters from the electrical cabinets in the second electrical cabinet subset charge the batteries from the electrical cabinets in the first electrical cabinet subset in the fourth stage.

The heating module 202 is configured to control a duration for the first electrical cabinet subset to charge the second electrical cabinet subset to be shorter than a duration for the second electrical cabinet subset to charge the first electric al cabinet subset when the number of batteries included in the first electrical cabinet subset is greater than the number of batteries included in the second electrical cabinet subset.

The apparatus further includes: a heating condition determining module, configured to obtain the electrical parameters of the batteries in each electrical cabinet and determine whether there exists a target electrical cabinet that meets the preset heating condition based on the electrical parameters of the battery in each electrical cabinet.

The apparatus further includes: a stop control module, configured to determine whether a preset stop heating condition is met based on the electrical parameters of the battery in each electrical cabinet included in the charge-discharge loop and send a stop heating instruction to the voltage converters of the electrical cabinets in the charge-discharge loop when it is determined that the preset stop heating condition is met.

The battery self-heating control apparatus provided in the foregoing embodiments of this application shares the same inventive concept as the battery self-heating control method provided in the embodiments of this application and have the same beneficial effects as the methods employed, operated, or implemented by its stored applications.

FIG. 23 shows a schematic block diagram of an electronic device 700 according to an embodiment of this application. As shown in FIG. 7, the electronic device 700 includes a processor 710. Optionally, the electronic device 700 further includes a memory 720, where the memory 720 is configured to store a computer program, and the processor 710 is configured to read the computer program and perform the battery self-heating control method in the foregoing various embodiments of this application based on the computer program. The electronic device may include a system controller of an energy storage system, a voltage converter in an electrical cabinet, a battery management system, and the like.

An embodiment of this application further provides a computer-readable storage medium configured to store a computer program, and when the computer program is executed by a processor, the method in the foregoing various embodiments of this application is implemented.

An embodiment of this application further provides a computer program product, including a computer program. The computer program is executed by a processor to implement the method in the foregoing various embodiments of this application embodiments.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division of the units is merely a logical function division, and another division manner may be used during actual implementation. For example, a plurality of units or components may be combined, or may be integrated into another system, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

Units described as separate components may or may not be physically separated. A component displayed as a unit may be one or more physical units, and may be located in one place, or may be distributed in a plurality of network elements. Some or all of the units may be selected based on an actual requirement, to achieve the objectives of the solutions in this embodiment.

In addition, function units in all the embodiments of this application may be integrated into one processing unit, or each of the units may exist alone physically, or two or more units may be integrated into one unit.

When realized in form of software functional unit and sold or used as an independent product, the function may also be stored in a computer-readable storage medium. Based on such understanding, the technical solutions of the application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to perform all or part of the steps of the method in all the embodiments of the application. The foregoing storage medium includes any medium that can store program code, such as a USB flash drive, a removable hard disk, a read-only memory (Read-only Memory, ROM), a random access memory (Random Access memory, RAM), a magnetic disk, or an optical disc.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An energy storage system, **characterized by** comprising a system controller, a switch module, and a plurality of electrical cabinets; wherein
the plurality of electrical cabinets are connected in parallel, one end of the switch module is connected to a high-voltage bus, and another end is connected to a connection point of the plurality of parallel electrical cabinets;
the system controller is communicatively connected to the switch module and each electrical cabinet, respectively; and
the system controller is configured to control the formation of a charge-discharge loop among the plurality of electrical cabinets when there exists an electrical cabinet among the plurality of electrical cabinets that meets a preset heating condition.

2. The energy storage system according to claim 1, **characterized in that** the electrical cabinet comprises a battery, a battery management system, and a voltage converter; and
the battery management system, the system controller, and the voltage converter are all communicatively connected.

3. The energy storage system according to claim 2, **characterized in that**
the battery management system is configured to detect electrical parameters of the battery and transmit the electrical parameters to the system controller; and
the system controller is configured to control the switch module to disconnect when it is determined based on the electrical parameters that the electrical cabinet meets the preset heating condition.

4. The energy storage system according to any one of claims 1 to 3, **characterized in that**
the system controller is configured to send a heating instruction to at least one of the electrical cabinets when there exists an electrical cabinet among the plurality of electrical cabinets that meets the preset heating condition, the at least one electrical cabinet comprising the electrical cabinet that meets the preset heating condition; and
the at least one electrical cabinet is configured to construct a charge-discharge loop among the electrical cabinets based on the heating instruction and control batteries in the charge-discharge loop to alternately charge and discharge.

5. The energy storage system according to claim 2 or 3, **characterized in that** the voltage converter comprises at least one bridge arm with flying capacitors and at least one energy storage element, the bridge arms corresponding one-to-one with the energy storage elements; and
one end of the energy storage element is connected to the positive electrode of a battery in an electrical cabinet to which the voltage converter belongs, and the other end of the energy storage element is connected to a connection point between an upper bridge arm and a lower bridge arm of a bridge arm corresponding to the energy storage element.

6. The energy storage system according to claim 2 or 3, **characterized in that** the voltage converter comprises at least one bridge arm without flying capacitors and at least two energy storage elements, each bridge arm being connected to two energy storage elements, respectively; and
the bridge arm comprises at least four sequentially connected switching transistors; and the positive and negative electrodes of a battery in an electrical cabinet to which the voltage converter belongs are respectively connected to two energy storage elements connected to the bridge arm.

7. A battery self-heating control method, **characterized by** applying to the energy storage system according to any one of claims 1 to 6, wherein the method comprises:
determining that there exists at least one target electrical cabinet that meets a preset heating condition; and
controlling a plurality of electrical cabinets comprising the target electrical cabinet to form a charge-discharge loop, and charging and discharging a battery in the target electrical cabinet based on the charge-discharge loop.

8. The method according to claim 7, **characterized in that** the controlling a plurality of electrical cabinets comprising the target electrical cabinet to form a charge-discharge loop comprises:
controlling the switch module to disconnect;
determining a plurality of candidate electrical cabinets for forming a charge-discharge loop, the plurality of candidate electrical cabinets comprising the target electrical cabinet; and
controlling on/off of power devices in voltage converters of the plurality of candidate electrical cabinets to form a charge loop and a discharge loop that are alternately switched.

9. The method according to claim 8, **characterized in that** the determining a plurality of candidate electrical cabinets for forming a charge-discharge loop comprises:
determining, based on electrical parameters of batteries in remaining electrical cabinets except the target electrical cabinet, electrical cabinets that meet a preset charge-discharge condition from the remaining electrical cabinets;
selecting at least one electrical cabinet from the electrical cabinets that meet the preset charge-discharge condition; and
determining the target electrical cabinet and the selected at least one electrical cabinet as the plurality of candidate electrical cabinets for forming a charge-discharge loop.

10. The method according to claim 8, **characterized in that** the controlling on/off of power devices in voltage converters of the plurality of candidate electrical cabinets to form a charge loop and a discharge loop that are alternately switched comprises:
determining, based on the plurality of candidate electrical cabinets, candidate electrical cabinets to be comprised in each of at least one charge-discharge loop to be formed, the each charge-discharge loop comprising at least one target electrical cabinet that meets the preset heating condition; and
controlling on/off of the power devices in the voltage converters of the candidate electrical cabinets comprised in each charge-discharge loop separately, to form a charge loop and a discharge loop that are alternately switched in each charge-discharge loop.

11. The method according to claim 10, **characterized in that** the determining, based on the plurality of candidate electrical cabinets, candidate electrical cabinets to be comprised in each of at least one charge-discharge loop to be formed comprises:
determining to form one charge-discharge loop and dividing the plurality of candidate electrical cabinets into a first electrical cabinet set and a second electrical cabinet set; and
determining the first electrical cabinet set and the second electrical cabinet set as two sets of electrical cabinets in the one charge-discharge loop.

12. The method according to claim 10, **characterized in that** the determining, based on the plurality of candidate electrical cabinets, candidate electrical cabinets to be comprised in each of at least one charge-discharge loop to be formed comprises:
determining to form multiple charge-discharge loops, the number of the multiple charge-discharge loops being less than or equal to the number of the target electrical cabinets;
dividing the plurality of candidate electrical cabinets into multiple sets of electrical cabinets, each comprising at least two candidate electrical cabinets; and
determining the multiple sets of electrical cabinets as the candidate electrical cabinets to be comprised in each of the multiple charge-discharge loops, respectively.

13. The method according to claim 10, **characterized in that** the controlling on/off of the power devices in the voltage converters of the candidate electrical cabinets comprised in each charge-discharge loop separately, to form a charge loop and a discharge loop that are alternately switched in each charge-discharge loop comprises:
sending the heating instruction to voltage converters of electrical cabinets in a first charge-discharge loop, the first charge-discharge loop being any charge-discharge loop in the each charge-discharge loop; and
controlling, based on the heating instruction, the formation of a charge loop and a discharge loop that are alternately switched in the first charge-discharge loop.

14. The method according to claim 13, **characterized in that** the sending the heating instruction to voltage converters of electrical cabinets in a first charge-discharge loop comprises:
sending the heating instruction to the voltage converter of each electrical cabinet in the first charge-discharge loop.

15. The method according to claim 13, **characterized in that** the sending the heating instruction to voltage converters of electrical cabinets in a first charge-discharge loop comprises:
sending the heating instruction to the voltage converter of a target electrical cabinet in the first charge-discharge loop; and
forwarding the heating instruction to voltage converters of other electrical cabinets in the first charge-discharge loop through the voltage converter of the target electrical cabinet.

16. The method according to claim 13, **characterized in that** the first charge-discharge loop comprises a first electrical cabinet subset and a second electrical cabinet subset, the battery power corresponding to the first electrical cabinet subset being greater than the battery power corresponding to the second electrical cabinet subset; and
the controlling, based on the heating instruction, the formation of a charge loop and a discharge loop that are alternately switched in the first charge-discharge loop comprises:
controlling in a first stage, based on the heating instruction, the formation of a loop in which batteries of electrical cabinets in the first electrical cabinet subset charge batteries of electrical cabinets in the second electrical cabinet subset; and
controlling in a second stage the formation of a loop in which the batteries of the electrical cabinets in the second electrical cabinet subset charge the batteries of the electrical cabinets in the first electrical cabinet subset.

17. The method according to claim 13, **characterized in that** the first charge-discharge loop comprises a first electrical cabinet subset and a second electrical cabinet subset, the battery power corresponding to the first electrical cabinet subset being equal to the battery power corresponding to the second electrical cabinet subset; and
the controlling, based on the heating instruction, the formation of a charge loop and a discharge loop that are alternately switched in the first charge-discharge loop comprises:
controlling in a first stage, based on the heating instruction, the formation of a loop in which the batteries of electrical cabinets in the first electrical cabinet subset charge energy storage elements of the voltage converter in their respective electrical cabinets, respectively;
controlling in a second stage the formation of a loop in which the batteries and the energy storage elements of the voltage converters of the electrical cabinets in the first electrical cabinet subset charge batteries of electrical cabinets in the second electrical cabinet subset;
controlling in a third stage the formation of a loop in which the batteries of the electrical cabinets in the second electrical cabinet subset charge energy storage elements of the voltage converter in their respective electrical cabinets; and
controlling in a fourth stage the formation of a loop in which the batteries and the energy storage elements of the voltage converters of the electrical cabinets in the second electrical cabinet subset charge the batteries of the electrical cabinets in the first electrical cabinet subset.

18. The method according to claim 16 or 17, **characterized in that** the method further comprises:
controlling a duration for the first electrical cabinet subset to charge the second electrical cabinet subset to be shorter than a duration for the second electrical cabinet subset to charge the first electrical cabinet subset when the number of batteries comprised in the first electrical cabinet subset is greater than the number of batteries comprised in the second electrical cabinet subset.

19. The method according to any one of claims 7 to 17, **characterized in that** the method further comprises:
obtaining electrical parameters of the battery in each electrical cabinet; and
determining whether there exists a target electrical cabinet that meets the preset heating condition based on the electrical parameters of the battery in each electrical cabinet.

20. The method according to any one of claims 7 to 17, **characterized by** after the charging and discharging a battery in the target electrical cabinet based on the charge-discharge loop, further comprising:
determining whether a preset stop heating condition is met based on the electrical parameters of the battery in each electrical cabinet comprised in the charge-discharge loop; and
sending a stop heating instruction to the voltage converters of the electrical cabinets in the charge-discharge loop when it is determined that the preset stop heating condition is met.

21. A battery self-heating control apparatus, **characterized by** applying to the energy storage system according to any one of claims 1 to 6, wherein the apparatus comprises:
a determining module, configured to determine that there exists at least one target electrical cabinet that meets a preset heating condition; and
a heating module, configured to control a plurality of electrical cabinets comprising the target electrical cabinet to form a charge-discharge loop, and charge and discharge a battery in the target electrical cabinet based on the charge-discharge loop.

22. An electronic device, comprising a memory, a processor, and a computer program stored in the memory and capable of running on the processor, **characterized in that** when the computer program is executed by the processor, the method according to any one of claims 7 to 20 is implemented.

23. A computer-readable storage medium, the computer-readable storage medium having stored thereon a computer program, **characterized in that** when the computer program is executed by a processor, the method according to any one of claims 7 to 20 is implemented.

24. A computer program product comprising a computer program, **characterized in that** when the computer program is executed by a processor, the method according to any one of claims 7 to 20 is implemented.
